# EUROPEAN PATENT SPECIFICATION

(11) **EP 3 713 975 B1**
(45) Date of publication and mention of the grant of the patent: **12.10.2022**
(21) Application number: 18800932.8
(22) Date of filing: 12.11.2018
(51) Int. Cl.: C08F 257/02, C08F 220/08, C09D 151/00, C08F 220/28, C08F 120/28, C09D 133/14

(54) **AN ADDITIVE COMPOSITION AND APPLICATION THEREOF**
ADDITIVZUSAMMENSETZUNG UND ANWENDUNG DAVON
COMPOSITION D'ADDITIF ET SON APPLICATION

(30) Priority: 21.11.2017 WO PCT/CN2017/112150
(43) Date of publication of application: 30.09.2020
(73) Proprietor: BASF SE, 67056 Ludwigshafen am Rhein (DE)
(72) Inventor: WEI, Zhen, Shanghai 200137 (CN); XU, Shuang Shuang, Shanghai 200137 (CN); ZHOU, Juan, Shanghai 200137 (CN); ZENG, Zhong, Shanghai 200137 (CN)
(86) International application number: PCT/EP2018/080890
(87) International publication number: WO 2019/101556

(56) References cited:
- WO-A1-2013/103528
- WO-A1-2017/011972
- WO-A1-2018/064335
- WO-A1-2018/218470
- WO-A1-2018/218501
- US-A1- 2008 135 060
- US-A1- 2012 148 858

## Description

### Field of the Invention

The present invention relates to an additive composition containing polymer of acetoacetyl functional ethylenically unsaturated monomer and the use thereof for abatement of free aldehydes, especially formaldehyde, or removing the same in the air.

### Background

In recent years, with increasing concerns about health issues, indoor air quality has drawn more and more attention. It is reported that indoor air pollution is more severer than that of outdoor. Volatile organic compounds (VOCs) are the main pollutants of indoor air and formaldehyde is the one that concerns us the most, which can cause health problems such as headache, dizziness, nausea, and irritations of eyes, respiratory organ and skin, etc., and has been classified as a known human carcinogen associated with nasal sinus cancer and nasopharyngeal cancer by IARC (International Agency for Research on Cancer) since 2004. Recent studies have also shown a positive correlation between the exposure to formaldehyde and the development of leukemia.

Various methods have been proposed in the art for abatement of free aldehydes pollutants in indoor air.

WO 2008/073211A2 discloses a particulate filter media comprising a particulate or powdery acetoacetate-functional polymer as the filter medium that is effective in removing gaseous aldehydes present in air. Various copolymers of acetoacetate-functional monomer and ethylenically unsaturated comonomers were proposed as the acetoacetate-functional polymer in the patent application.

WO 2014/191573A1 discloses a binder comprising a polymer having at least one functional group for binding formaldehyde, where the functional group is reacted with formaldehyde present in air to bind covalently with formaldehyde. The binder is useful for decorative or industrial coatings that can be applied to various media in order to sanitize the internal air of a room by binding free formaldehyde. Polymers having at least one functional group for binding formaldehyde were proposed in the patent application, including acetoacetate grafted polymers, hydrazide grafted polymers, and copolymers of acetoacetate functional monomer and acrylic comonomer.

JP 2004/148221A discloses an aldehyde adsorption agent comprising a vinyl-acetate based resin containing an acetoacetyl group, which is used as an adhesive agent for various substrates, especially as floor adhesive. The vinyl-acetate based resin comprises (a) 50 to 99.5% by weight of vinyl acetate, (b) 0.5 to 30% by weight of acetoacetyl group-containing ethylenically unsaturated monomer, and (c) 0 to 45% by weight of other copolymerizable ethylenic unsaturated monomers.

WO 2017/011972A1 discloses a copolymer as a coating additive for abatement of formaldehyde, which comprises from 20% to 60% by weight of at least one acetoacetoxy or acetoacetamide functional ethylenically unsaturated monomer, and from 40 % to 80% by weight of at least one water soluble ethylenically unsaturated monomer, based on total dry weight of the copolymer.

US2012/0148858 discloses a method for reducing an amount of an aldehyde on or near a substrate by applying to the substrate an aldehyde abatement composition, wherein the composition comprises an amino-functional compound selected from: (1) compounds with a primary amino functional group and a weight average molecular weight of less than about 1000 g/mol; (2) compounds with a secondary amino functional group; (3) compounds with a tertiary amino functional group; (4) compounds with a functional group comprising an amine complex; the composition further comprising a polymer having an acetoacetyl functional group.

Although various methods have been proposed for the abatement of air pollutant aldehydes, especially formaldehyde, there is still a need for permanently abatement of free aldehydes from indoor air.

### Summary of the Invention

It was found that a polymer of acetoacetyl functional ethylenically unsaturated monomer, especially in combination with an amine, is capable of effectively abatement of free aldehydes, especially formaldehyde, or removing the same in the air.

Accordingly, in the first embodiment, the present disclosure relates to an additive composition for abatement of free aldehydes, particularly formaldehyde, or removing the same in the air, which comprises
- a polymer of acetoacetyl functional ethylenically unsaturated monomer, which contains at least 70 wt%, more preferably 80 to 100 wt%, even more preferably 90 to 100 wt% of at least one acetoacetyl functional ethylenically unsaturated monomer, and 0 to 30 wt%, more preferably 0 to 20 wt%, even more preferably 0 to 10 wt% of at least one ethylenically unsaturated monomer other than the acetoacetyl functional ethylenically unsaturated monomer, based on the total weight of all monomer(s), and
- at least one amine.

The present disclosure relates to, in the second embodiment, an interior coating composition, preferably a waterborne interior coating composition, which comprises
- a binder,
- a polymer of acetoacetyl functional ethylenically unsaturated monomer as described in the first embodiment, and
- optionally, at least one amine.

The present disclosure relates to, in the third embodiment, use of the polymer of acetoacetyl functional ethylenically unsaturated monomer as described in the first embodiment for abatement of free aldehydes, particularly formaldehyde, or removing free aldehydes, particularly formaldehyde, in the air.

The present disclosure relates to, in the fourth embodiment, use of a polymer of acetoacetyl functional ethylenically unsaturated monomer as described in the first embodiment for abatement of free aldehydes in combination with at least one amine for abatement of free aldehydes, particularly formaldehyde, or removing free aldehydes, particularly formaldehyde, in the air.

### Detailed Description of the Invention

### Polymer of Acetoacetyl Functional Ethylenically Unsaturated Monomer

The present invention provides a polymer of acetoacetyl functional ethylenically unsaturated monomer, which contains at least 70 wt% of at least one acetoacetyl functional ethylenically unsaturated monomer and 0 to 30 wt% of at least one ethylenically unsaturated monomer other than the acetoacetyl functional ethylenically unsaturated monomer, based on the total weight of all monomer(s), as an additive for abatement of free aldehydes, or removing the same in the air.

Hereinafter, when the polymer to be used as an additive for abatement of free aldehydes, or removing the same in the air is to be mentioned, the expression "the polymer(s) of acetoacetyl functional ethylenically unsaturated monomer according to the present invention" or "the polymer(s) according to the present invention" will be used.

### Acetoacetyl functional Ethylenically Unsaturated Monomer

The acetoacetyl functional ethylenically unsaturated monomer which is the main monomer the polymer according to the present invention has an acetoacetoxy or acetoacetamino functional group attached to an ethylenically unsaturated moiety. Preferably, the acetoacetyl functional ethylenically unsaturated monomer is of formula (I) or formula (II) 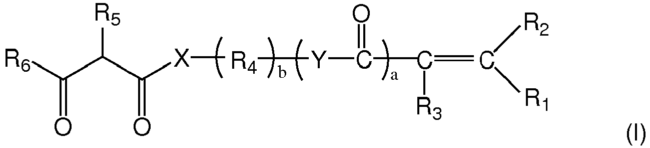 or 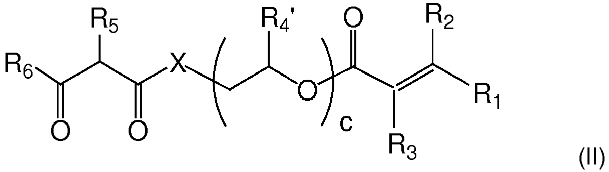 wherein
R₁ is H or C₁₋₁₀-alkyl;
R₂ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₃ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₄ is C₁₋₁₀-alkylene or phenylene;
R₅ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₆ is C₁₋₁₀-alkyl;
R₄' is H or C₁₋₄-alkyl;
X and Y are independently O or N;
a and b are independently 0 or 1, which are not simultaneously zero; and
c is a number in the range of 2 to 10.

The term "C₁₋₁₀-alkyl" as used herein generally includes both linear and branched aliphatic hydrocarbon moieties having 1 to 10 carbons, preferably 1 to 6 carbons (C₁₋₆-alkyl), more preferably1 to 4 carbons (C₁₋₄-alkyl), for example, methyl, ethyl, n-propyl, *i*-propyl, butyl, *t*-butyl, *i*-butyl, pentyl, n-hexyl and isomeric groups, n-heptyl and isomeric groups such as 4,4-dimethylpentyl, n-octyl and isomeric groups such as 2,2,4-trimethylpentyl, n-nonyl and isomeric groups, n-decyl and isomeric groups, or aliphatic cyclic hydrocarbon radicals containing 3 to 10 carbons, preferably 3 to 8 carbons, such as cyclopropyl, cyclobutyl, cyclopentyl, cyclohexyl, cycloheptyl and cyclooctyl.

The term "C₁₋₁₀-alkylene" as used herein generally includes both linear and branched bivalent aliphatic hydrocarbon radicals having 1 to 10 carbons, preferably 1 to 6 carbons (C₁₋₆-alkylene), more preferably 1 to 4 carbons (C₁₋₄-alkylene), for example, methylene, ethylene, propylene, butylene, pentylene, hexylene, heptylene, octylene, nonylene, decylene, 1-methyl ethylene, 1-ethyl ethylene, 1-ethyl-2-methyl ethylene, 1,1-dimethyl ethylene and 1-ethyl propylene.

The term "C₁₋₁₀-alkoxy" as used herein generally includes both linear and branched alkoxy having 1 to 10 carbons, preferably 1 to 6 carbons (C₁₋₆-alkoxy), more preferably1 to 4 carbons (C₁₋₄-alkoxy), for example, methoxy, ethoxy, n-propoxy, isopropoxy, n-butoxy, sec-butoxy, tert-butoxy, n-amyloxy, isoamyloxy, tert-amyloxy, heptyloxy, octyloxy, isooctyloxy, nonyloxy and decyloxy.

In a particular embodiment of the acetoacetyl functional ethylenically unsaturated monomer of formula (I), a is 0 or 1, b is 1, which are not simultaneously zero.

In a preferable embodiment of the acetoacetyl functional ethylenically unsaturated monomer of formula (I), R₁, R₂ and R₃ are, independently from each other, selected from H and C₁₋₄-alkyl, preferably methyl or ethyl; R₄ is C₁₋₄-alkylene, preferably methylene or ethylene; R₅ is selected from H and methyl, preferably H; R₆ is selected from methyl, ethyl and propyl, preferably methyl; X is O or N, preferably O; Y is O; a is 0 or 1, b is 1, which are not simultaneously zero.

In a further preferable embodiment of the acetoacetyl functional ethylenically unsaturated monomer of formula (I), R₁, R₂ and R₃ are, independently from each other, selected from H and methyl; R₄ is methylene or ethylene; R₅ is H; R₆ is methyl; X is O or N, preferably O; a is 0; and b is 1.

In a preferable embodiment of the acetoacetyl functional ethylenically unsaturated monomer of formula (I), R₁, R₂ and R₃ are, independently from each other, selected from H and methyl; R₄ is methylene or ethylene; R₅ is H; R₆ is methyl; X is O or N, preferably O; Y is O; both a and b are 1.

In a preferable embodiment of the acetoacetyl functional ethylenically unsaturated monomer of formula (II), R₁, R₂ and R₃ are, independently from each other, selected from H and C₁₋₄-alkyl, preferably methyl or ethyl; R₅ is selected from H and methyl, preferably H; R₆ is selected from methyl, ethyl and propyl, preferably methyl; X is O or N, preferably O; R₄' is selected from H, methyl and ethyl; and c is 2, 3, 4, 5, 6, 7 or 8.

In a further preferable embodiment of the acetoacetyl functional ethylenically unsaturated monomer of formula (II), R₁, R₂ and R₃ are, independently from each other, selected from H and methyl; R₅ is H; R₆ is methyl; R₄' is H or methyl; X is O or N, preferably O; and c is 2, 3, 4, 5, 6, 7 or 8.

In one further preferable embodiment, the acetoacetyl functional ethylenically unsaturated monomer of formula (I) can be selected from compounds listed in Table 1 (with X = O, Y = O, R₅ = H and R₆ = CH₃):

**Table 1**

| | a = | b = | R₁ = | R₂ = | R₃ = | R₄ = |
|---|---|---|---|---|---|---|
| Structure IA1 | 0 | 1 | H | H | H | CH₂ |
| Structure IA2 | 0 | 1 | H | H | H | C2H4 |
| Structure IA3 | 0 | 1 | H | H | H | C₄H₈ |
| Structure IA4 | 0 | 1 | H | H | CH₃ | CH₂ |
| Structure IA5 | 0 | 1 | H | H | CH₃ | C2H4 |
| Structure IA6 | 0 | 1 | H | H | CH₃ | C₄H₈ |
| Structure IA7 | 0 | 1 | CH₃ | H | H | CH₂ |
| Structure IA8 | 0 | 1 | CH₃ | H | H | C₂H₄ |
| Structure IA9 | 0 | 1 | CH₃ | H | H | C₄H₈ |
| Structure IA10 | 0 | 1 | CH₃ | H | CH₃ | CH₂ |
| Structure IA11 | 0 | 1 | CH₃ | H | CH₃ | C₂H₄ |
| Structure IA12 | 0 | 1 | CH₃ | H | CH₃ | C₄H₈ |
| Structure IA13 | 0 | 1 | CH₃ | CH₃ | H | CH₂ |
| Structure IA14 | 0 | 1 | CH₃ | CH₃ | H | C₂H₄ |
| Structure IA15 | 0 | 1 | CH₃ | CH₃ | H | C₄H₈ |
| Structure IA16 | 0 | 1 | CH₃ | CH₃ | CH₃ | CH₂ |
| Structure IA17 | 0 | 1 | CH₃ | CH₃ | CH₃ | C₂H₄ |
| Structure IA18 | 0 | 1 | CH₃ | CH₃ | CH₃ | C₄H₈ |
| Structure IA19 | 1 | 1 | H | H | H | CH₂ |
| Structure IA20 | 1 | 1 | H | H | H | C₂H₄ |
| Structure IA21 | 1 | 1 | H | H | H | C₄H₈ |
| Structure IA22 | 1 | 1 | H | H | CH₃ | CH₂ |
| Structure IA23 | 1 | 1 | H | H | CH₃ | C₂H₄ |
| Structure IA24 | 1 | 1 | H | H | CH₃ | C₄H₈ |
| Structure IA25 | 1 | 1 | CH₃ | H | H | CH₂ |
| Structure IA26 | 1 | 1 | CH₃ | H | H | C₂H₄ |
| Structure IA27 | 1 | 1 | CH₃ | H | H | C₄H₈ |
| Structure IA28 | 1 | 1 | CH₃ | H | CH₃ | CH₂ |
| Structure IA29 | 1 | 1 | CH₃ | H | CH₃ | C₂H₄ |
| Structure IA30 | 1 | 1 | CH₃ | H | CH₃ | C₄H₈ |
| Structure IA31 | 1 | 1 | CH₃ | CH₃ | H | CH₂ |
| Structure IA32 | 1 | 1 | CH₃ | CH₃ | H | C₂H₄ |
| Structure IA33 | 1 | 1 | CH₃ | CH₃ | H | C₄H₈ |
| Structure IA34 | 1 | 1 | CH₃ | CH₃ | CH₃ | CH₂ |
| Structure IA35 | 1 | 1 | CH₃ | CH₃ | CH₃ | C₂H₄ |
| Structure IA36 | 1 | 1 | CH₃ | CH₃ | CH₃ | C₄H₈ |

In another further preferable embodiment, the acetoacetyl functional ethylenically unsaturated monomer of formula (I) can be selected from compounds listed in Table 2 (with X = O, Y = N, R₅ = H and R₆ = CH₃):

**Table 2**

| | a = | b = | R₁ = | R₂ = | R₃ = | R₄ = |
|---|---|---|---|---|---|---|
| Structure IB1 | 1 | 1 | H | H | H | CH₂ |
| Structure IB2 | 1 | 1 | H | H | H | C₂H₄ |
| Structure IB3 | 1 | 1 | H | H | H | C₄H₈ |
| Structure IB4 | 1 | 1 | H | H | CH₃ | CH₂ |
| Structure IB5 | 1 | 1 | H | H | CH₃ | C₂H₄ |
| Structure IB6 | 1 | 1 | H | H | CH₃ | C₄H₈ |
| Structure IB7 | 1 | 1 | CH₃ | H | H | CH₂ |
| Structure IB8 | 1 | 1 | CH₃ | H | H | C₂H₄ |
| Structure IB9 | 1 | 1 | CH₃ | H | H | C₄H₈ |
| Structure IB10 | 1 | 1 | CH₃ | H | CH₃ | CH₂ |
| Structure IB11 | 1 | 1 | CH₃ | H | CH₃ | C₂H₄ |
| Structure IB12 | 1 | 1 | CH₃ | H | CH₃ | C₄H₈ |
| Structure IB13 | 1 | 1 | CH₃ | CH₃ | H | CH₂ |
| Structure IB14 | 1 | 1 | CH₃ | CH₃ | H | C₂H₄ |
| Structure IB15 | 1 | 1 | CH₃ | CH₃ | H | C₄H₈ |
| Structure IB16 | 1 | 1 | CH₃ | CH₃ | CH₃ | CH₂ |
| Structure IB17 | 1 | 1 | CH₃ | CH₃ | CH₃ | C₂H₄ |
| Structure IB18 | 1 | 1 | CH₃ | CH₃ | CH₃ | C₄H₈ |

In a third further preferable embodiment, the acetoacetyl functional ethylenically unsaturated monomer of formula (II) can be selected from compounds listed in Table 3 (with R₄' = H, R₅ = H and R₆ = CH₃):

**Table 3**

| | X = | c = | R₁ = | R₂ = | R₃ = |
|---|---|---|---|---|---|
| Structure IIA1 | O | 2 | H | H | H |
| Structure IIA2 | O | 2 | H | H | CH₃ |
| Structure IIA3 | O | 2 | CH₃ | H | H |
| Structure IIA4 | O | 2 | CH₃ | H | CH₃ |
| Structure IIA5 | O | 2 | CH₃ | CH₃ | H |
| Structure IIA6 | O | 2 | CH₃ | CH₃ | CH₃ |
| Structure IIA7 | N | 2 | H | H | H |
| Structure IIA8 | N | 2 | H | H | CH₃ |
| Structure IIA9 | N | 2 | CH₃ | H | H |
| Structure IIA10 | N | 2 | CH₃ | H | CH₃ |
| Structure IIA11 | N | 2 | CH₃ | CH₃ | H |
| Structure IIA12 | N | 2 | CH₃ | CH₃ | CH₃ |
| Structure IIA13 | O | 3 | H | H | H |
| Structure IIA14 | O | 3 | H | H | CH₃ |
| Structure IIA15 | O | 3 | CH₃ | H | H |
| Structure IIA16 | O | 3 | CH₃ | H | CH₃ |
| Structure IIA17 | O | 3 | CH₃ | CH₃ | H |
| Structure IIA18 | O | 3 | CH₃ | CH₃ | CH₃ |
| Structure IIA19 | N | 3 | H | H | H |
| Structure IIA20 | N | 3 | H | H | CH₃ |
| Structure IIA21 | N | 3 | CH₃ | H | H |
| Structure IIA22 | N | 3 | CH₃ | H | CH₃ |
| Structure IIA23 | N | 3 | CH₃ | CH₃ | H |
| Structure IIA24 | N | 3 | CH₃ | CH₃ | CH₃ |

Examples of particular acetoacetyl functional ethylenically unsaturated monomers include, but are not limited to, compounds of following formulas

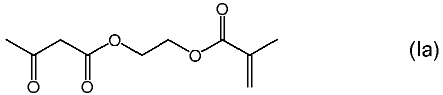

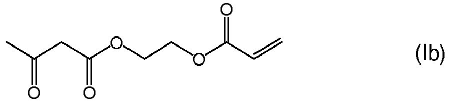

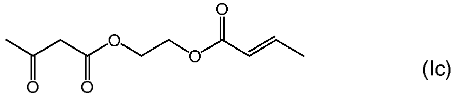

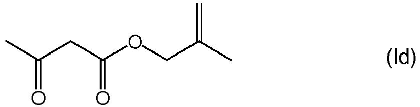

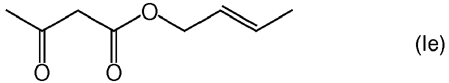

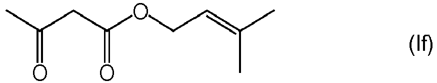

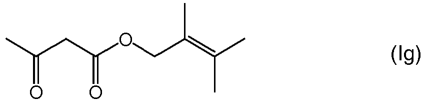

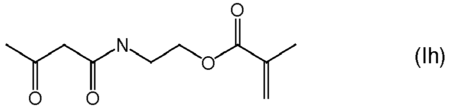

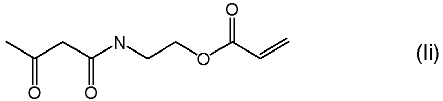

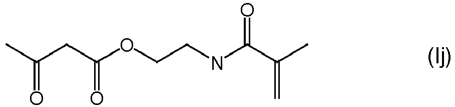

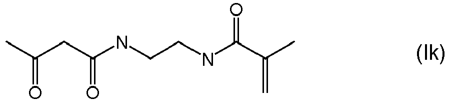

It is preferable that the at least one acetoacetyl functional ethylenically unsaturated monomer may be contained in the polymer according to the present invention in an amount of 80 to 100 wt%, even more preferably 90 to 100 wt% or 95 to 100 wt%, based on the total weight of all monomer(s).

### Ethylenically Unsaturated Monomer(s) Other Than the Acetoacetyl Functional Ethylenically Unsaturated Monomer

The polymer according to the present invention may optionally contain at least one ethylenically unsaturated monomer other than the acetoacetyl functional ethylenically unsaturated monomer.

There is no particular restriction on the optional ethylenically unsaturated monomer that may be contained in the polymer according to the present invention. Examples of the optional ethylenically unsaturated monomer may include, but are not limited to, acrylic acid, methacrylic acid, acrylamide, methacrylamide, N,N-dimethylacrylamide (DMA), 2-hydroxyethylmethacrylate (HEMA), 2-hydroxyethyl acrylate, hydroxypropyl acrylate, hydroxypropyl methacrylate (HPMA), dimethylaminoethyl methacrylate (DMAEMA), dimethylaminoethylmethacrylamide, allyl alcohol, vinylpyridine, C₂₋₁₀-alkylene glycol diacrylate, C₂₋₁₀-alkylene glycol dimethacrylate, glycerol acrylate, glycerol methacrylate, ureido acrylate, ureido methacrylate, N-(1,1-dimethyl-3-oxobutyl)acrylamide, N-vinyl-2-pyrrolidone (NVP), N-vinyl formamide, N-vinyl acetamide, N-vinyl isopropylamide, N-vinyl-N-methyl acetamide, N-vinyl caprolactam, C₁₋₁₀-alkyl acrylates and C₁₋₁₀-alkyl methacrylates, C₁₋₁₀-alkyl acrylamides, C₁₋₁₀-alkyl methacrylamides, acrylonitrile, methacrylonitrile, vinyl C₁₋₁₀-alkanoates, C₂₋₁₀-alkenes, C₂₋₁₀-halo-alkenes, styrene, C₁₋₆-alkyl styrene, vinyl alkyl ethers in which the alkyl moiety has 1 to 6 carbon atoms. Preferably, the optional ethylenically unsaturated monomer is selected from acrylic acid, methacrylic acid, acrylamide, methacrylamide, methyl acrylate, ethyl acrylate, propylacrylate, isopropylacrylate, n-butyl acrylate, cyclohexylacrylate, 2-ethylhexylacrylate, methyl methacrylate, ethyl methacrylate, propyl methacrylate, n-butyl methacrylate, vinyl acetate, vinyl propionate, vinyl butyrate, vinyl valerate, styrene, chloroprene, vinyl chloride, vinylidene chloride, acrylonitrile, methacrylonitrile, 1-butene, butadiene, vinyl toluene and vinyl ethyl ether.

It is preferable that the at least one ethylenically unsaturated monomer other than the acetoacetyl functional ethylenically unsaturated monomer is contained in the polymer according to the present invention in an amount of 0 to 30 wt%, preferably 0 to 20 wt%, more preferably 0 to 10 wt% or 0 to 5 wt%, based on the total weight of all monomer(s).

For the purpose of the present invention, the polymer of acetoacetyl functional ethylenically unsaturated monomer according to the present invention has a weight-average molecular weight (Mw) in the range of 5,000 to 3,000,000, preferably from 10,000 to 100,000, more preferably from 15,000 to 50,000, as measured by Gel Permeation Chromatography (GPC) against polystyrene standard in tetrahydrofuran.

There is no particular restriction on the process by which the polymer of acetoacetyl functional ethylenically unsaturated monomer according to the present invention may be prepared. The polymer of acetoacetyl functional ethylenically unsaturated monomer according to the present invention may be prepared by any suitable process known in the art for polymerization of ethylenically unsaturated monomer(s). For example, the polymer of acetoacetyl functional ethylenically unsaturated monomer according to the present invention may be prepared by an emulsion or solution polymerization process, particularly a free-radical emulsion polymerization.

For the preparation of the polymer of acetoacetyl functional ethylenically unsaturated monomer according to the present invention by, for example, free-radical emulsion polymerization, suitable free-radical polymerization initiators are all those capable of initiating free-radical emulsion polymerization. These may be, for example, peroxides, hydroperoxides, such as alkali metal peroxodisulfates; and azo compounds. Also suitable are initiator mixtures or redox initiator systems, for example, t-butyl hydroperoxide/sodium hydroxymethanesulfonate, hydrogen peroxide/ascorbic acid, sodium persulfate/sodium disulfite, tert-butyl hydroperoxide/sodium disulfite and ascorbic acid/iron(II) sulfate/sodium persulfate. The initiators may be used in any conventional amounts, for example, an amount of 0.01 to 5 wt%, based on the amount of all monomer(s) to be polymerized.

For the free-radical emulsion polymerization, at least one emulsifier may be used in an amount of up to 30 wt%, preferably 0.3 to 10 wt% and more preferably 0.5 to 5 wt%, based on the amount of all monomer(s) to be polymerized. Suitable emulsifiers include, but are not limited to, nonionic emulsifiers, such as ethoxylated mono-, di- and tri-alkylphenols (EO: 3 to 50, alkyl radical: C₄-C₉), ethoxylates of long-chain alcohols (EO: 3 to 50, alkyl radical: C₈-C₃₆) and polyethylene oxide/polypropylene oxide block copolymers; anionic emulsifiers, such as alkali metal salts and ammonium salts of alkyl sulfates (alkyl radical: C₈-C₁₂), alkali metal salts and ammonium salts of ethoxylated alkanol sulfate (EO: 2 to 50, alkyl radical: C₁₂-C₁₈), alkali metal salts and ammonium salts of ethoxylated alkylphenols (EO: 3 to 50, alkyl radical: C₄-C₉), alkali metal salts and ammonium salts of C₁₂-C₁₈ alkylsulfonic acids and of C₉-C₁₈ alkylarylsulfonic acids; cationic emulsifiers, and/or amphoteric emulsifiers. Further suitable emulsifiers can be found, for example, in Houben-Weyl, Methoden der organischen Chemie, Vol. 14/1, Makromolekulare Stoffe, Georg Thieme Verlag, Stuttgart, 1961, pages 192 to 208.

For the free-radical emulsion polymerization, at least one chain transfer agent may also be used. Suitable chain transfer agents include, but are not limited to, methanol, ethanol, propanol, butanol, C₂₋₈-ketones such as acetone, methylethyl ketone, acetaldehyde, n-butyl aldehyde, benzaldehyde, and mercaptans, such as dodecyl mercaptan and lauryl mercaptan, thioglycolic acid, octyl thioglycolate, and thioglycerol, mercaptoacetates such as 2-ethylhexyl mercaptoacetate. The at least one chain transfer agent may be used in any conventional amount, for example, 0.01 to 5 wt%, preferably 0.05 to 2.5 wt%, based on the amount of the all monomer(s) to be polymerized.

The free-radical emulsion polymerization for preparation of the polymer of acetoacetyl functional ethylenically unsaturated monomer according to the present invention may be carried out in the absence or in the presence of a seed for adjustment of the polymer particle size. Any seed that is known suitable for free-radical emulsion polymerization, for example, a foreign polymer seed such as polystyrene seed or a polymer seed generated in situ, may be used. The processes for polymerization in the presence of a seed are, for example, described in Encyclopedia of Polymer Science and Technology, Vol. 5, John Wiley & Sons Inc., New York, 1966, page 847.

Other conventional substances useful for free-radical emulsion polymerization, for example, protective colloids, buffering agents, non-surfactant stabilizers and/or inert salts, may also be used for the preparation of the polymer of acetoacetyl functional ethylenically unsaturated monomer according to the present invention.

The free-radical emulsion polymerization for preparation of the polymer of acetoacetyl functional ethylenically unsaturated monomer according to the present invention is not subjected to any real limitations with regard to the process parameters. For example, the free-radical emulsion polymerization may be carried out at a temperature between 20 and 100 °C, preferably between 50 and 95 °C, in particular between 60 and 90 °C; and at atmospheric pressure or under a light vacuum.

The polymer of acetoacetyl functional ethylenically unsaturated monomer according to the present invention is effective for abatement of free aldehydes, or removing the same in the air. Preferably, the polymer of acetoacetyl functional ethylenically unsaturated monomer according to the present invention may be used in combination with at least one amine.

### Amines

Without being intended to be bound by any theory, the at least one amine improves the effectiveness of the polymer according to the present invention for abatement of free aldehydes, or removing the same in the air.

The amine suitable for the purpose of the present invention may be any of mono amines or polyamines.

The monoamines generally have at least one hydrocarbyl group containing from 1 to 30 carbon atoms, preferably from 4 to 20 carbon atoms. The at least one hydrocarbyl group of the monoamines may be linear, branched or cyclic, and unsubstituted or substituted by a hydroxy or C_{1- 10}-alkoxy group. Examples of the monoamines include, but are not limited to, methylamine, ethylamine, propylamine, isopropylamine, butylamine, isobutylamine, tert-butylamine, pentylamine, hexylamine, octylamine, 2-ethylhexylamine, 2-amino-2-methyl-1-propanol, 2-propyheptylamine, dimethylamine, methylethylamine, diethylamine, dipropylamine, diisopropylamine, dibutylamine, dipentylamine, dihexylamine, pyrrolidine, piperidine, coco amine, oleylamine, tallow amine, soya amine, aniline, and N-methylaniline, toluidine. Preferably, the monoamines are butylamine, isobutylamine, tert-butylamine, pentylamine, hexylamine, and 2-amino-2-methyl-1-propanol.

Polyamines are also useful for the purpose of the present invention. One class of polyamines, for example, have at least one hydrocarbylene group containing from 2 to 30 carbon atoms between two N atoms. The at least one hydrocarbylene group of the polyamines may be linear, branched or cyclic, unsubstituted or substituted. Examples of the polyamines include, but are not limited to, C₂₋₃₀-diamines, such as 1,2-ethylenediamine, 1,3-propanediamine, N,N-dimethyl-1,3-propanediamine, N,N'-dimethyl-1,3-propanediamine, 1,4-butanediamine(putrescine), N,N,N',N'-tetramethyl-1,4-butanediamine, 2-phenylbutane-1,2-diamine, 3-methylbutane-1,3-diamine, 1,6-hexanediamine, trimethylhexamethylenediamine (CAS No. 25513-64-8), 2,2-dimethyl-1,3-propanediamine, 1,2-pentanediamine, 1,3-pentanediamine, 1,5-pentanediamine(cadaverine), 1,4-pentanediamine, 1,8-octanediamine, 1,9-nonandiamine, N,N'-dimethyl-1,8-octanediamine, 1,3-cyclopentanediamine, 1,2-cyclopentanediamine, isophorone diamine, 1,2-cyclohexanediamine, 1,3-cyclohexanediamine, 1,4-cyclohexanediamine, 2,2,4,4-tetramethyl-1,3-cyclobutanediamine, piperazine, diethylene triamine, di-(1,2-propylene)triamine, triethylene tetramine, tripropylene tetramine, and tetraethylene pentamine. Preferably the polyamines includes C₂₋₁₅-diamines, more preferably C₂₋₁₀-diamines, more preferably C₂₋₆-diamines.

Another class of polyamines include polyalkylenimines, such as polyethylenimine and polypropylenimine. In the context of the present invention, the term polyethylenimine does not only refer to polyethylenimine homopolymers but also to polyalkylenimines containing NH-CH₂-CH₂-NH units together with other alkylene diamine units, for example, NH-CH₂-CH₂-CH₂-NH units, NH-CH₂-CH(CH₃)-NH units, NH-(CH₂)₄-NH units, NH-(CH₂)₆-NH units or NH-(CH₂)₈-NH units, but NH-CH₂-CH₂-NH units being in the majority with respect to the molar share, for example amounting to 60 mol% or more, more preferably amounting to at least 70 mol%, referring to all alkylenimine units. In a particular embodiment, the term polyethylenimine refers to those polyalkylenimines that contain only one or zero alkylenimine unit other than NH-CH₂-CH₂-NH per polyethylenimine structural unit.

The term polypropylenimine in the context of the present invention does not only refer to polypropylenimine homopolymers but also to polyalkylenimines containing NH-CH₂-CH(CH₃)-NH units together with other alkylene diamine units, for example, NH-CH₂-CH₂-CH₂-NH units, NH-CH₂-CH₂-NH units, NH-(CH₂)₄-NH units, NH-(CH₂)₆-NH units or NH-(CH₂)₈-NH units but NH-CH₂-CH(CH₃)-NH units being in the majority with respect to the molar share. Preferred polypro-pylenimines contain NH-CH₂-CH(CH₃)-NH units being in the majority with respect to the molar share, for example amounting to 60 mol% or more, more preferably amounting to at least 70 mol%, referring to all alkylenimine units. In a special embodiment, the term polypropylenimine refers to those polyalkylenimines that bear only one or zero alkylenimine unit other than NH-CH₂-CH(CH₃)-NH per polypropylenimine structural unit.

The polyalkylenimines useful for the purpose of the present invention generally have a weight average molecular weight (M_{w}) in the range of about 100 to about 4.3×10⁶, preferably in the range of about 500 to about 2×10⁶, or in the range of about 800 to about 2×10⁶, or in the range of about 800 to about 2×10⁵, most preferably about 800 to 2×10⁴ g/mol.

The polyethylenimines are commercially available or may be obtained by a skilled person in the art via well-known processes. Suitable processes for preparing polyethylenimines are well known. For example, linear polyethylenimines may be prepared for example by post-modification of other polymers such as poly(2-oxazolines), as described in High Molecular Weight Linear Polyethylenimine and Poly(N-methylethylenimine), Tanaka, Ryuichi, et al, Macromolecules. 16 (6), 849-853, 1983*,* or N-substituted polyaziridines, as described in New Synthesis of Linear Polyethylenimine, Weyts, Katrien F. and Goethals, Eric J., Polymer Bulletin, 19 (1), 13-19, 1988*;* branched polyethylenimines may be prepared for example by the ring opening polymerization of aziridine, which has been developed for a long time, for example, as described in Advances in the Chemistry of Polyethyleneimine(Polyaziridine), Zhuk, D. S., Gem-bitskii, P. A., and Kargin V. A., Russian Chemical Reviews, Vol 34 (7), 515-526, 1965.

Branched polyalkylenimines, especially polyethylenimines, are preferably used for the purpose of the present invention, which have a weight-average molecular weight (Mw) of 200 to 30,000, preferably 300 to 10,000 and more preferably 500 to 2,000.

Another class of polyamines include polyether amines, preferably polyether amines with a weight average molecular weight in the range of 104 to 8,000, more preferably 148 to 6,000 and even more preferably 200 to 4,000. Any polyether amines commercially available or obtainable by a known process may be used, such as, polyether diamines, polyether triamines, or any combination thereof. The polyether amines useful for the present invention generally have a weight-average molecular weight (Mw) in the range of 100 to 6,000.

The polyether amines useful for the purpose of the present invention may be selected from polyether diamines having a structure of formula (III) 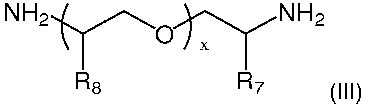 wherein
R₇ is H or methyl, preferably methyl;
R₈ is H or methyl, preferably methyl; and
x is a number such that the polyether diamines have a weight-average molecular weight (Mw) in the range of 104 to 8,000, preferably 148 to 6,000 and more preferably 200 to 4,000.

The polyether amines useful for the purpose of the present invention may also be selected from polyether triamines having a structure of formula (IV), 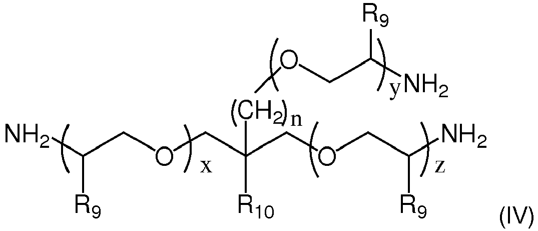 wherein
R₉ is H, methyl or ethyl, preferably methyl;
R₁₀ is H or C₁₋₁₀-alkyl, preferably H or C₁₋₄-alkyl, more preferably H, methyl, ethyl, propyl or butyl; and
x, y, z are numbers such that the polyether triamines have a weight-average molecular weight (Mw) in the range of 300 to 6,000, preferably 400 to 5,000, for example, 440 to 3,000.

In a particular embodiment, a polyether diamine having a structure of the following formula (V) 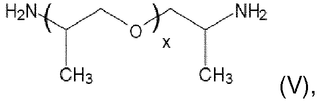 wherein x is a number such that the polyether diamine has a weight-average molecular weight (Mw) in the range of 132 to 8,000, preferably 190 to 6,000 and more preferably 230 to 4,000.

Any of the amine setforth or a mixture thereof can be used in combination with the polymer according to the present invention for abatement of free aldehydes, or removing the same in the air. In particular, a mixture of two or more of the polyether amines setforth is preferably used for the purpose of the present invention. In a more preferable embodiment, a mixture of two or more polyether diamines setforth is used for the purpose.

### Additive Composition for abatement of Aldehydes

Accordingly, the present invention provides an additive composition for abatement of free aldehydes, or removing the same in the air, which comprises
- a polymer of acetoacetyl functional ethylenically unsaturated monomer according to the present invention; and
- optionally, at least one amine.

Any description and preferences as described hereinabove for the polymer of acetoacetyl functional ethylenically unsaturated monomer according to the present invention and the at least one amine are applicable here for both in the additive composition.

The additive composition may comprise the polymer of acetoacetyl functional ethylenically unsaturated monomer, which is selected from Structures IA1-IA36, Structures IB1-IB18 and Structures IIA1-IIA24, and at least one amine, which can be selected from polyamines, preferably polyalkylenimines, more preferably polyether amines, and even more preferably polyether diamines. Preferably, the additive composition comprises the polymer of monomers selected from Structures IA1-IA36, Structures IB1-IB18 and Structures IIA1-IIA24 and at least one amine selected from polyether amines. In a most preferable embodiment, the additive composition comprises polymer of monomers selected from Structures IA1-IA36, Structures IB1-IB18 and Structures IIA1-IIA24 and at least one amine selected from polyether diamines.

The polymer of acetoacetyl functional ethylenically unsaturated monomer according to the present invention and the at least one amine may be used in combination in any suitable ratios, for example, in a weight ratio in the range of 5:1 to 1:5, preferably 3:1 to 1:3, for example, 1:1, each based on dry weight. It is noted the weight ratio as discussed refers to the ratio of the polymer of acetoacetyl functional ethylenically unsaturated monomer according to the present invention to the amine or to the sum of all amines if more than one is used.

Additionally, the additive composition may comprise solvents, such as water, stabilizers, emulsifiers, diluents, other polymers as matrix, and any other suitable substances that may be present in the additive composition.

The polymer of acetoacetyl functional ethylenically unsaturated monomer as described in various embodiments hereinabove, optionally together with the at least amine, may be applied, for example, in an interior coating composition, for abatement of free aldehydes, especially formaldehyde, or removing the same in the air.

### Interior Coating Composition

The present invention further provides an interior coating composition, preferably a waterborne interior coating composition, which comprises a binder, the polymer of acetoacetyl functional ethylenically unsaturated monomer according to the present invention, and optionally at least one amine. In a preferable embodiment, the interior coating composition further comprises at least one amine.

The type of the interior coating composition is not limited, which may be, for example, wall paints, radiator coatings and floor coatings, and also coatings for windows and doors. The interior coating composition may have a solid content of 20 to 80 wt%, preferably 50 to 75 wt%, based on the total weight of the composition. The interior coating composition may even have a lower solid content if no pigment and/or filler were comprised. For example, an interior coating composition comprising neither pigment nor filler may have a solid content as low as 5 wt%, based on the total weight of the composition.

In a particular embodiment, the interior coating composition comprises
- a binder,
- a polymer of at least 70 wt% of at least one acetoacetyl functional ethylenically unsaturated monomer and 0 to 30 wt% of at least one ethylenically unsaturated monomer other than the acetoacetyl functional ethylenically unsaturated monomer, based on the total weight of all monomer(s), and
- optionally at least one amine.

In a preferable embodiment, the interior coating composition comprises
- a binder,
- a polymer of at least 70 wt% of at least one acetoacetyl functional ethylenically unsaturated monomer and 0 to 30 wt% of at least one ethylenically unsaturated monomer other than the acetoacetyl functional ethylenically unsaturated monomer, based on the total weight of all monomer(s), and
- at least one amine.

In a more preferable embodiment, the interior coating composition comprises
- a binder,
- a polymer of at least 70 wt% of at least one acetoacetyl functional ethylenically unsaturated monomer and 0 to 30 wt% of at least one ethylenically unsaturated monomer other than the acetoacetyl functional ethylenically unsaturated monomer, based on the total weight of all monomer(s), and
- at least one polyamine.

Any description and preferences as described hereinabove for the polymer of acetoacetyl functional ethylenically unsaturated monomer according to the present invention and the amine are applicable here for both in the interior coating composition according to the present invention.

The polymer of acetoacetyl functional ethylenically unsaturated monomer according to the present invention is present in the interior coating composition in an amount of 0.1 to 30 wt%, preferably 0.1 to 10 wt%, more preferably 0.3 to 10 wt%, most preferably from 0.3 to 5 wt%, based on the total weight of the interior coating composition.

The at least one amine, if present, is contained in the interior coating composition in an amount of 0.1 to 30 wt%, preferably 0.1 to 10 wt%, more preferably from 0.3 to 10 wt%, most preferably from 0.3 to 5 wt%, based on the total weight of the interior coating composition.

The term "binder" as used herein refers to organic, polymeric compounds which are responsible for forming film among other components of the interior coating composition. The interior coating composition may comprise at least one binder. The binder may be present in an amount of 1 to 90 wt%, more preferably 5 to 80 wt%, most preferably of 6 to 70 wt%, based on the total weight of the interior coating composition. Particularly, for wall paints, radiator coatings and floor coatings, and also coatings for windows and doors, the binder may be present in an amount of 1 to 80 wt%, or 3 to 50 wt%, based on the total weight of the interior coating composition.

There is no particular restriction on the binder that may be present in the interior coating composition according to the present invention. Binders which are useful for the interior coating composition include, but are not limited to, alkyd resins, epoxy resins, polyurethanes, vinyl acetate/ethylene copolymers, water glasses, more particularly potassium waterglasses, and also binders based on acrylates, styrene and/or vinyl esters such as styrene acrylates or butyl acrylates.

For example, it is preferable for wall paints to comprise vinyl acetate/ethylene copolymers, styrene acrylates, butyl acrylates or mixtures of these polymers as the binder; and it is preferable for radiator and floor coatings, and coatings for windows and doors to comprise polyurethanes, acrylates, alkyd resins, epoxy resins and any mixture thereof.

There is no particular restriction on the incorporation manner of the polymer of acetoacetyl functional ethylenically unsaturated monomer according to the present invention and the optional amine into the binder. For example, the polymer of acetoacetyl functional ethylenically unsaturated monomer, bulk or a water emulsion thereof, may be first incorporated in a small fraction of binder to obtain a dispersion containing 3 wt% of the polymer of acetoacetyl functional ethylenically unsaturated monomer according to the present invention in the binder, which is then incorporated into the remaining binder to formulate an interior coating composition together with the optional amine and any other components. Also, the amine may be pre-added into a small fraction of the binder to obtain a dispersion and then incorporated into the remaining binder to formulate an interior coating composition together with the polymer according to the present invention and any other components.

Additionally, the interior coating composition may contain further components, such as pigment, filler, solvent, water, and further additives such as preservative, thickener, dispersant and defoamer.

Suitable pigment includes, for example, inorganic white pigments, such as titanium dioxide, barium sulfate, zinc oxide, zinc sulfide, basic lead carbonate, antimony trioxide, and lithopones; inorganic colored pigments, such as iron oxides, carbon black, graphite, zinc yellow, zinc green, Ultramarin, manganese black, antimony black, and manganese violet; organic color pigments, such as indigo, azo dyes, anthraquinoids and indidental dyes, as well as dioxazine, quinacridone, phthalocyanine, isoindolinone and metal complex pigments. Also suitable are synthetic white pigments with air inclusions for increasing light scattering, such as the Rhopaque^{®} dispersions. The pigment may be present, if present, in an amount of 20 to 80 wt%, preferably 50 to 75 wt% in the case of wall paints, or in an amount of no more than 25 wt%, preferably no more than 15 wt%, most preferably no more than 10 wt% in the case of transparent or semi-transparent coatings, based on the total weight of the interior coating composition.

Suitable filler includes, for example, kaolin, talc, mica, magnesite, alkaline earth carbonates such as calcite or chalk, magnesium carbonate, dolomite, alkaline earth sulfates such as calcium sulfate, silicon compounds such as silicon dioxide or aluminum silicates or magnesium aluminum silicates, and aluminum oxide or aluminum oxide hydrate. The filler may be present, if present, in an amount of 1 to 90 wt%, preferably 20 to 60 wt% in the case of wall paint, or in an amount of no more than 5 wt%, preferably no more than 2 wt %, most preferably no more than 1 wt % in the case of transparent or semi-transparent coatings, based on the total weight of the interior coating composition.

Suitable organic solvent includes, for example, trimethylpentane, propylene glycol or dipropylene glycol butyl ether. The organic solvent may be present, if present, in an amount of less than 5 wt%, based on the total weight of the interior coating composition.

Suitable preservative includes, for example, isothiazolinone preparations such as 2-methyl-2H-isothiazol-3-one or 1,2-benzisothiazolin-3H-one. The preservative may be present in an amount of less than 2 wt%, preferably less than 0.3 wt%, based on the total weight of the interior coating composition.

Suitable thickener includes, for example, cellulose ethers, bentonite, polysaccharides, fumed silica, phyllosilicates, or polyurethane thickeners. The thickener may be present in an amount of less than 1 wt%, preferably less than 0.6 wt%, based on the total weight of the interior coating composition.

Suitable dispersant includes, for example, alkylbenzenesulfonates, polycarboxylates, fatty acid amines or salts of polyacrylic acids. The dispersant may be present in an amount of less than 2 wt%, preferably 0.001 to 0.5 wt%, based on the total weight of the interior coating composition.

Suitable defoamer includes, for example, poly(organo)siloxanes, silicone oils or mineral oils. The defoamer may be present in an amount of less than 1 wt%, more preferably 0 to 0.5 wt%, based on the total weight of the interior coating composition.

The present invention is further demonstrated and exemplified in the following Examples, however, without being limited to the embodiments described in the Examples.

### Examples

Following materials were used in preparation processes of the polymers of acetoacetyl functional ethylenically unsaturated monomer by free-radical emulsion polymerization and in test processes for abatement of formaldehyde.

Herein, the weight average molecular weight, unless otherwise indicated, was measured by Gel Permeation Chromatography (GPC) against polystyrene standard in tetrahydrofuran.

In the following description, the part and percentage values are in wt%, unless otherwise specified.

Seed A: a polystyrene dispersion, as prepared by a process described hereinbelow.

Emulsifier: Sodium Dodecyl Sulfate, available from Sinopharm Group Co., Ltd., CHINA.

Catalyst: FeSO₄, available from Sinopharm Group Co., Ltd., CHINA.

Initiator: t-butyl hydroperoxide, available from Sinopharm Group Co., Ltd., CHINA.

Chain transfer agent: 2-ethylhexyl mercaptoacetate (EHTG), available from Sinopharm Group Co., Ltd., CHINA.

Polyether amines: polyether diamines of following formula 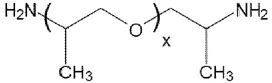
PA 301, Mw = 230;
PA 302, Mw = 400;
PA 303, Mw = 2,000.

Polyalkylenimines: PEI-FG, Weight Average Molecular Weight (Mw): 800 g/ mol, measured by GPC; Viscosity at 20 °C: 5000 mpa•s, Brookfield, ISO 2555; Pour point: -18 °C, ISO 3016; Ratio of primary/secondary/tertiary amine: 1/0.9/0.5, ¹³C NMR.

Binder: a water-based dispersion of n-BA/2-EHA/AAm/AA copolymer, as prepared by a process as described below.

### Preparation Examples:

### Preparation of Seed A

24g of water and 3g of 25% aqueous sodium dodecyl sulfate solution were added into a reactor and heated to 85 °C. Separately, a premix of 25g of styrene, 25g of 25% aqueous sodium dodecyl sulfate solution and 25g of water was prepared. Then the premix and 14g of 7% aqueous sodium persulfate solution were fed into the reactor simultaneously and separately over 90 minutes. After polymerization, the reaction system was maintained at a temperature of 85 °C for 30 minutes and then cooled down to 25 °C.

### Preparation of the binder

45.28g of DI water, 0.1g of 25% aqueous sodium dodecyl sulfate solution and 8.42g of Seed A were added into a reactor and heated up to 85 °C. Separately, 155.08g of DI water, 10.46g of 25% aqueous sodium dodecyl sulfate solution, 118.81g of n-butyl acrylate (n-BA), 131.37g of 2-ethylhexyl acrylate (2-EHA), 7.5g of 30% aqueous acrylamide (AAm) solution, 7.67g of acrylic acid (AA) were mixed together to obtain a pre-emulsion. When the reaction mixture in the reactor is maintained at 85 °C, 1.82g of 7% aqueous sodium persulfate solution was poured into the reactor within 1 minute. After additional 3 minutes, the pre-emulsion and 8.82g of 7% aqueous sodium persulfate solution were fed over 180 minutes simultaneously. At the 150^{th} minute from the beginning, both pre-emulsion feeding and sodium persulfate feeding were stopped and 1.11g of Silquest A171 (vinyltrimethoxysilane, from Momentive Performance Materials Inc., USA) was added into the remaining pre-emulsion, and then feeding of the pre-emulsion and sodium persulfate was continued simultaneously. After polymerization, 43.06g of 4% aqueous NaOH solution was added into the reaction mixture for neutralization. Then 5.56 g of 10% t-butyl hydroperoxide was fed over 60 minutes, and 7.26g of 13% aqueous NaHSO₃ solution was fed over 60 minutes, wherein both feeding operations were started simultaneously, to remove the residual monomers. The reaction mixture was cooled down to 25 °C, and was adjusted to a final solid content of 50 wt% by DI water to obtain a water-based binder dispersion comprising the n-BA/2-EHA/AAm/AA copolymer having a weight-average molecular weight (Mw) of 735,000.

### 1. Homopolymer of Acetoacetoxyethyl Methacrylate (AAEMA)

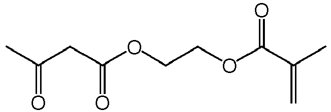

3.47g of Seed A and 210.17g of DI water were added into a reactor together and heated up to 65°C. Separately, 82.14g of DI water, 3.57g of 2-ethylhexyl mercaptoacetate (EHTG), 1g of 20% ammonia water, 15.32g of 25% aqueous sodium dodecyl sulfate solution, 168.15g of acetoacetoxyethyl methacrylate (AAEMA) were mixed together to obtain a pre-emulsion. When the reaction mixture in the reactor is maintained at 65°C, 1.36g of 7% aqueous sodium persulfate solution, 15.03g of 10% aqueous t-butyl hydroperoxide solution, 1.05g of 6% aqueous FeSO₄ solution were poured into the reactor within 1 minute separately, and then 3.65g of 2.6% aqueous NaHSO₃ solution was poured into the reactor within the second minute. After additional 3 minutes, the pre-emulsion was fed over 90 minutes and 32.84g of 2.6% aqueous NaHSO₃ solution was fed over 105 minutes, wherein both feeding operations were started simultaneously. After polymerization, 5.49g of 5% aqueous t-butyl hydroperoxide solution was fed over 60 minutes and 6.33g of 2.6% aqueous NaHSO₃ solution was fed over 60 minutes, wherein both feeding operations were started simultaneously, to remove the residual monomers. The reaction mixture was cooled down to 25°C, and was adjusted to a final solid content of 30 wt% by DI water to obtain a dispersion of homopolymer of AAEMA.

### 2. Homopolymer of Acetoacetoxyethyl Acrylate (AAEA)

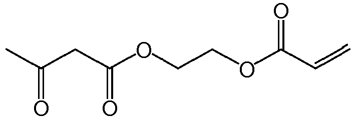

The homopolymer of acetoacetoxyethyl acrylate was prepared by a process same as the process described above for homopolymer of AAEMA, except that 168.15g of acetoacetoxyethyl acrylate (AAEA) was used in place of AAEMA.

### 3. Homopolymer of 2-[(E)-but-2-enoyl]oxyethyl 3-Oxobutanoate

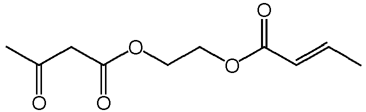

The homopolymer of 2-[(E)-but-2-enoyl]oxyethyl 3-oxobutanoate was prepared by a process same as the process described above for homopolymer of AAEMA, except that 168.15g of 2-[(E)-but-2-enoyl]oxyethyl 3-oxobutanoate was used in place of AAEMA.

### 4. Homopolymer of 2-Methylprop-2-enyl 3-Oxobutanoate

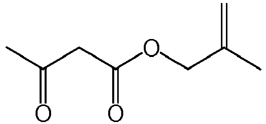

The homopolymer of 2-methylprop-2-enyl 3-oxobutanoate was prepared by a process same as the process described above for homopolymer of AAEMA, except that 168.15g of 2-methylprop-2-enyl 3-oxobutanoate was used in place of AAEMA.

### 5. Homopolymer of (E)-But-2-en-1-yl 3-Oxobutanoate

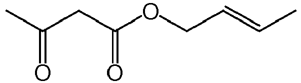

The homopolymer of (E)-but-2-en-1-yl 3-oxobutanoate was prepared by a process same as the process described above for homopolymer of AAEMA, except that 168.15g of (E)-but-2-en-1-yl 3-oxobutanoate was used in place of AAEMA.

### 6. Homopolymer of Prenyl 3-Oxobutanoate

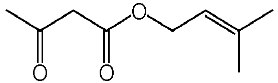

The homopolymer of prenyl 3-oxobutanoate was prepared by a process same as the process described above for homopolymer of AAEMA, except that 168.15g of prenyl 3-oxobutanoate was used in place of AAEMA.

### 7. Homopolymer of 2,3-Dimethyl-but-2-enyl Acetoacetate

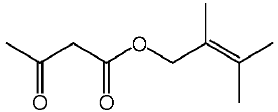

The homopolymer of 2,3-dimethyl-but-2-enyl acetoacetate was prepared by a process same as the process described above for homopolymer of AAEMA, except that 168.15g of 2,3-dimethyl-but-2-enyl acetoacetate was used in place of AAEMA.

### 8. Homopolymer of Acetoacetoxyethyl Methacrylate (AAEMA) via In-Situ Seed Process

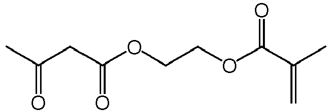

3.47g of 25% aqueous sodium dodecyl sulfate solution and 210.17g of DI water were added into a reactor together and heated up to 65°C. Separately, 82.14g of DI water, 3.57g of 2-ethylhexyl mercaptoacetate (EHTG), 1g of 20% ammonia water, 15.32g of 25% aqueous sodium dodecyl sulfate solution, 168.15g of acetoacetoxyethyl methacrylate (AAEMA) were mixed together to obtain a pre-emulsion. When the reaction mixture in the reactor is maintained at 65°C, 10.7g of the pre-emulsion was first added, and then after 2 minutes, 1.36g of 7% aqueous sodium persulfate solution, 1.83g of 10% aqueous t-butyl hydroperoxide solution, 1.05g of 6% aqueous FeSO₄ solution were poured into the reactor within 1 minute separately. After additional 1 minute, 3.65g of 2.6% aqueous NaHSO₃ solution was poured into the reactor. After 5 minutes, 13.2g of 10% aqueous t-butyl hydroperoxide solution was poured into the reactor, and after additional 2 minutes, the remaining pre-emulsion was fed within 90 minutes and 32.84g of 2.6% aqueous NaHSO₃ solution was fed over 105 minutes, wherein both feeding operations were started simultaneously. After polymerization, 5.49g of 5% aqueous t-butyl hydroperoxide solution was fed within 60 minutes and 6.33g of 2.6% aqueous NaHSO₃ solution was fed within 60 minutes, wherein both feeding operations were started simultaneously, to remove the residual monomers. The reaction mixture was cooled down to 25°C, and was adjusted to a final solid content of 30 wt% by DI water to obtain a dispersion of homopolymer of AAEMA.

### 9. Copolymer of Acetoacetoxyethyl Methacrylate (AAEMA, 70%), n-Butyl Acrylate (n-BA, 12%) and Methyl Methacrylate (MMA, 18%)

2.46 of Seed A and 149.28 DI water were added into a reactor together and heated up to 65°C. Separately, 58.35g of DI water, 2.82g of 20% ammonia water, 10.88g of 25% aqueous sodium dodecyl sulfate solution, 202.07g of acetoacetoxyethyl methacrylate (AAEMA), 34.78g of n-butyl acrylate (n-BA), 52.82g of methyl methacrylate (MMA) were mixed together to obtain a pre-emulsion. When the reaction mixture in the reactor is maintained at 65 °C, 0.96g of 7% aqueous sodium persulfate solution, 11.06g of 10% aqueous t-butyl hydroperoxide solution, 0.75g of 6% aqueous FeSO₄solution were poured into the reactor within 1 minute separately, then 2.59g of 2.6% aqueous NaHSO₃ solution was poured into the reactor over the 2nd minute. After additional 3 minutes, the pre-emulsion was fed over 90 minutes and 23.22g of 2.6% aqueous Na-HSO₃ solution was fed over 105 minutes, wherein both feeding operations were started simultaneously. After polymerization, 3.9g of 5% aqueous t-butyl hydroperoxide solution was fed over 60 minutes and 4.5g of 2.6% aqueous NaHSO₃ solution was fed over 60 minutes, wherein both feeding operations were started simultaneously, to remove the residual monomers. The reaction mixture was cooled down to 25°C, and was adjusted to a final solid content of 50% by DI water and to obtain a dispersion of copolymer of AAEMA/n-BA/MMA.

### 10. Copolymer of Acetoacetoxyethyl Methacrylate (AAEMA, 60%), n-Butyl Acrylate (n-BA, 16%) and Methyl Methacrylate (MMA, 24%)

2.46 of Seed A and 149.28 DI of water were added into a reactor together and heated up to 65°C. Separately, 58.35g of DI water, 2.82g of 20% ammonia water, 10.88g of 25% aqueous sodium dodecyl sulfate solution, 175.05g of acetoacetoxyethyl methacrylate (AAEMA), 47.11g of n-butyl acrylate (n-BA), 71.54g of methyl methacrylate (MMA) were mixed together to obtain a pre-emulsion. When the reaction mixture in the reactor is maintained at 65 °C, 0.96g of 7% aqueous sodium persulfate solution, 11.06g of 10% aqueous t-butyl hydroperoxide solution, 0.75g of 6% aqueous FeSO₄ solution were poured into the reactor within 1 minute separately, then 2.59g of 2.6% aqueous NaHSO₃ solution was poured into the reactor within the second minute. After additional 3 minutes, the pre-emulsion was fed over 90 minutes and 23.22g of 2.6% aqueous NaHSO₃ solution was fed over 105 minutes, wherein both feeding operations were started simultaneously. After polymerization, 3.9g of 5% aqueous t-butyl hydroperoxide solution was fed over 60 minutes and 4.5g of 2.6% aqueous NaHSO₃ solution was fed over 60 minutes, wherein both feeding operations were started simultaneously, to remove the residual monomers. The reaction mixture was cooled down to 25°C, and was adjusted to a final solid content of 50% by DI water and to obtain a dispersion of copolymer of AAEMA/n-BA/MMA.

### 11. Copolymer of Acetoacetoxyethyl Methacrylate (AAEMA, 6%), n-Butyl Acrylate (n-BA, 42.9%), 2-Ethylhexyl Acrylate (2-EHA, 47.5%), Acrylamide(Aam, 0.8%) and Acrylic Acid (AA, 2.8%)

45.28g of DI water, 0.1g of 25% aqueous sodium dodecyl sulfate solution and 8.42g of Seed A were added into a reactor and heated up to 85C. During heating, 155.08g of DI water, 10.46g of 25% aqueous sodium dodecyl sulfate solution, 118.81g of n-butyl acrylate (n-BA), 131.37g of 2-ethylhexyl acrylate (2-EHA), 16.6g acetoacetoxyethyl methacrylate (AAEMA), 7.5g of 30% aqueous acrylamide (AAm) solution, 7.67g of acrylic acid (AA) were mixed together to obtain a pre-emulsion. When the reaction mixture in the reactor is maintained at 85 °C, 1.82g of 7% aqueous sodium persulfate solution was poured into the reactor within 1 minute. After additional 3 minutes, the pre-emulsion and 8.82g of 7% aqueous sodium persulfate solution were fed over 180 minutes simultaneously. At the 150th minute from the beginning, both pre-emulsion feeding and sodium persulfate feeding were stopped and 1.11g of Silquest A171 (vinyltrimethoxysilane, from Momentive Performance Materials Inc., USA) was added into the remaining pre-emulsion, and then feeding of the pre-emulsion and sodium persulfate was continued simultaneously. After polymerization, 43.06g of 4% aqueous NaOH solution was added into the reaction mixture for neutralization, and then 5.56 g of 10% t-butyl hydroperoxide was fed over 60 minutes and 7.26g of 13% NaHSO₃ was fed over 60 minutes, wherein both feeding operations were started simultaneously, to remove the residual monomers. The reaction mixture was cooled down to 25 °C, and was adjusted to a final solid content of 50 wt% by DI water to obtain a dispersion of AAEMA-containing copolymer with a AAEMA content of about 6 wt % based on total weight of monomers.

### Working Examples - Formaldehyde Abatement Effectiveness

Residual formaldehyde contents were measured according to GB18582-2008, Appendix C in following Examples. The lower the residual formaldehyde content was measured, the more effectively the formaldehyde is captured and the less formaldehyde in the dispersion could be released to air.

### Example 1

1,000 ppm by weight of formaldehyde was added into 100g of the binder which was prepared as described hereinabove. After one day, the dispersion was subjected to evaporation and analyzed by HPLC (Model: Agilent 1200) to determine the residual formaldehyde content, which was 846 ppm.

### Example 2

3g of PA 302 was added into 100g of binder which was prepared as described hereinabove, and then 1,000 ppm by weight of formaldehyde was added into the mixture. After one day, the dispersion was subjected to evaporation and analyzed by HPLC (Model: Agilent 1200) to determine the residual formaldehyde content, which was 903 ppm.

### Example 3

10g of a dispersion of homopolymer of AAEMA as prepared in Preparation Example 1 was added into 100g of the binder which was prepared as described hereinabove, and then 1,000 ppm by weight of formaldehyde was added into the mixture. After one day, the dispersion was subjected to evaporation and analyzed by HPLC (Model: Agilent 1200) to determine the residual formaldehyde content, which was 450 ppm.

### Examples 4 to 13

A dispersion was prepared by adding 10g of a dispersion of the polymer as prepared in respective Preparation Examples 1 to 8 and 3g of a polyether amine into 100g of the binder which was prepared as described hereinabove. 1,000 ppm by weight of formaldehyde was added into the dispersion. After one day, the dispersion was subjected to evaporation at 150 °C under atmospheric pressure, and analyzed by HPLC (Model: Agilent 1200) to determine the residual formaldehyde content. The formaldehyde content as measured for each Example was shown in Table 1 below.

### Example 14

A dispersion was prepared by adding 8.6g of a dispersion of the polymer as prepared in Preparation Examples 9 and 3g of a polyether amine into 100g of the binder which was prepared as described hereinabove. 1000 ppm by weight of formaldehyde was added into the dispersion. After one day, the dispersion was subjected to evaporation at 150 °C under atmospheric pressure, and analyzed by HPLC (Model: Agilent 1200) to determine the residual formaldehyde content, which was 113 ppm.

### Examples 15

8.6g of a dispersion of the polymer as prepared in Preparation Example 9 was added into 100g of the binder which was prepared as described hereinabove, and then 1,000 ppm by weight of formaldehyde was added into the mixture. After one day, the dispersion was subjected to evaporation and analyzed by HPLC (Model: Agilent 1200) to determine the residual formaldehyde content, which was 450 ppm.

### Examples 16

A dispersion was prepared by adding 10g of a dispersion of the polymer as prepared in Preparation Example 10 and 3g of a polyether amine into 100g of the binder which was prepared as described hereinabove. 1,000 ppm by weight of formaldehyde was added into the dispersion. After one day, the dispersion was subjected to evaporation at 150 °C under atmospheric pressure, and analyzed by HPLC (Model: Agilent 1200) to determine the residual formaldehyde content, which was 227 ppm.

### Examples 17

10g of a dispersion of the polymer as prepared in respective Preparation Example 10 was added into 100g of the binder which was prepared as described hereinabove, and then 1,000 ppm by weight of formaldehyde was added into the mixture. After one day, the dispersion was subjected to evaporation and analyzed by HPLC (Model: Agilent 1200) to determine the residual formaldehyde content, which was 525 ppm.

### Example 18

100g of a dispersion of the polymer as prepared in Preparation Example 11 which corresponds to AAEMA modified copolymer of the binder was mixed with 3g of PA 302, to which 1,000 ppm by weight of formaldehyde was added. After one day, the mixture was subjected to evaporation and analyzed by HPLC (Model: Agilent 1200) to determine the residual formaldehyde content, which was 288 ppm.

**Table 4**

| Working Example No. | Dispersions of Polymer from | Mw | Amine | Residual Formaldehyde |
|---|---|---|---|---|
| Example 1 | None | / | None | 846 ppm |
| Example 2 | None | / | PA 302 | 903 ppm |
| Example 3 | Preparation Example 1 | 20,000 | None | 450 ppm |
| Example 4 | Preparation Example 1 | 20,000 | PA 302 | 87 ppm |
| Example 5 | Preparation Example 1 | 20,000 | PA 301 | 127 ppm |
| Example 6 | Preparation Example 1 | 20,000 | PA 303 | 72 ppm |
| Example 7 | Preparation Example 2 | 18,000 | PA 302 | 38 ppm |
| Example 8 | Preparation Example 3 | 22,000 | PA 302 | 89 ppm |
| Example 9 | Preparation Example 4 | 28,000 | PA 302 | 145 ppm |
| Example 10 | Preparation Example 5 | 25,000 | PA 302 | 107 ppm |
| Example 11 | Preparation Example 6 | 26,000 | PA 302 | 181 ppm |
| Example 12 | Preparation Example 7 | 31,000 | PA 302 | 173ppm |
| Example 13 | Preparation Example 8 | 20,000 | PA 302 | 90 ppm |
| Example 14 | Preparation Example 9 | 2,473,200 | PA 302 | 113ppm |
| Example 15 | Preparation Example 9 | 2,473,200 | None | 450ppm |
| Example 16 | Preparation Example 10 | 2,100,100 | PA 302 | 227 ppm |
| Example 17 | Preparation Example 10 | 2,100,100 | None | 525ppm |
| Example 18 | Preparation Example11 | 3,234,500 | PA 302 | 288 ppm |

It can be seen from the results as shown in Table 4, the polymers of acetoacetyl functional ethylenically unsaturated monomer according to the present invention, especially in combination with a polyamine, particularly polyether amine, can effectively reduce residual formaldehyde content, which means release of formaldehyde was significantly prevented or reduced.

### Example 19

Example 4 was repeated, except that the polyether amine PA 302 was replaced with following different amines in an equimolar amount in terms of amino group.

**Table 5**

| Amine | Residual Formaldehyde |
|---|---|
| Ammonia water | 448ppm |
| Butylamine | 369ppm |
| 2-amino-2-methyl-1-propanol | 215ppm |
| 1,6-Hexanediamine | 131ppm |
| Isophorondiamine | 119ppm |
| PEI-FG | 156ppm |
| PA 302 | 87ppm |

As shown in Table 5, besides polyamines (particularly polyether amines, and polyalkylenimines), small molecule monoamines and diamines, and especially diamines were also effective for improving the formaldehyde abatement effectiveness of the polymer of acetoacetyl functional ethylenically unsaturated monomer according to the present invention.

### Application Examples

### Application Example 1

A coating material was prepared with the dispersion of homopolymer of AAEMA as prepared in Preparation Example 1 in accordance with the formulation as shown in Table 6, to which 200 ppm by weight of formaldehyde was added and then was measured in the same way as described in above working Examples. The residual formaldehyde content was measured as 39 ppm.

**Table 6**

| Components | Contents |
|---|---|
| Binder, prepared as described hereinabove | 35.4 wt% |
| Dispersion of Hompolymer, from Preparation Example 1 | 3.5 wt % |
| Polyether Amine, PA 302 | 1.1 wt % |
| Dispersant, Dispex A40A, available from BASF, CHINA | 1 wt % |
| Thickener, Natrosol 250HBR, available from Ashland, CHINA | 0.5 wt % |
| 25% NH₄OH solution | 0.1 wt % |
| Titanium Dioxide, R-706, available from Du Pont, CHINA | 15 wt % |
| Natural fine CaCO₃, Omyacarb, available from Omya, CHINA | 20 wt % |
| Coalescent, Loxanol EFC 300, available from BASF, CHINA | 3 wt % |
| Defoamer, Foamstar ST2410, available from BASF, CHINA | 0.4 wt % |
| Water | 20 wt % |
| Total | 100 wt % |

### Application Example 2

Coating materials formulated with respective dispersions of polymer from Preparation Examples in accordance with the formulation as shown in Table 6 were also tested in accordance with Purification Performance of Coatings with Air Purification Standard JC/T 1074-2008 and the Standard spectrophotometric method GB/T 16129-1995 for examination of formaldehyde in air of residential area. The coating materials containing the polymers containing acetoacetyl functional ethylenically unsaturated monomer according to the present invention have a formaldehyde abatement effectiveness of > 90%, meeting the requirement of coating materials with decorative function according to Standard JC/T 1074-2008 A. The test results are shown in Table 7 below.

**Table 7**

| Coating Materials | Dispersions of Polymer from | Polyether amines | Formaldehyde Abatement Effectiveness |
|---|---|---|---|
| 1 | Preparation Example 1 | PA 302 | 93.3% |
| 2 | Preparation Example 3 | PA 302 | 93.0% |
| 3 | Preparation Example 6 | PA 302 | 90.6% |
| 4 | Preparation Example 7 | PA 302 | 91.0% |

It can be seen from the results as shown in Table 7, the coating containing the polymers of acetoacetyl functional ethylenically unsaturated monomer according to the present invention in combination with a polyether amine can effectively remove free formaldehyde in air.

Furthermore, the polymers of acetoacetyl functional ethylenically unsaturated monomer according to the present invention can be post-formulated into any commercial available coating materials, especially in combination with an amine, to provide formaldehyde abatement effect to the coating materials.

## Claims

1. An additive composition for abatement of free aldehydes, particularly formaldehyde, or removing the same in the air, which comprises
- a polymer of acetoacetyl functional ethylenically unsaturated monomer, which contains at least 70 wt%, more preferably 80 to 100 wt%, even more preferably 90 to 100 wt% of at least one acetoacetyl functional ethylenically unsaturated monomer, and 0 to 30 wt%, more preferably 0 to 20 wt%, even more preferably 0 to 10 wt% of at least one ethylenically unsaturated monomer other than the acetoacetyl functional ethylenically unsaturated monomer, based on the total weight of all monomer(s), and
- at least one amine.

2. The additive composition according to claim 1, wherein the at least one acetoacetyl functional ethylenically unsaturated monomer is of formula (I) or formula (II) 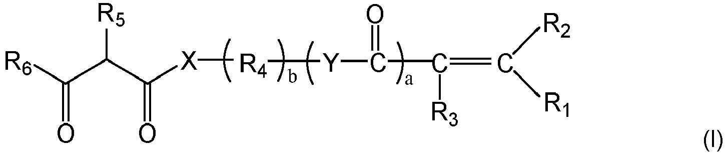 or 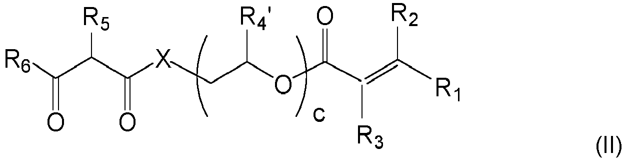 wherein
R₁ is H or C₁₋₁₀-alkyl;
R₂ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₃ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₄ is C₁₋₁₀-alkylene or phenylene;
R₅ is H, C₁₋₁₀-alkyl or phenyl which is optionally substituted with at least one of C₁₋₁₀-alkyl, F, Cl, Br, I, CN, hydroxyl and C₁₋₁₀-alkoxy groups;
R₆ is C₁₋₁₀-alkyl;
R4' is H or C₁₋₄-alkyl;
X and Y are independently O or N;
a and b are independently 0 or 1, which are not simultaneously zero; and
c is a number in the range of 2 to 10.

3. The additive composition according to claim 2, wherein R₁, R₂ and R₃ in formula (I) are, independently from each other, selected from H and C₁₋₄-alkyl,preferably methyl or ethyl; R₄ is C₁₋₄-alkylene, preferably methylene or ethylene; R₅ is selected from H and methyl, preferably H; R₆ is selected from methyl, ethyl and propyl, preferably methyl; X is O or N, preferably O; Y is O; a and b are independently 0 or 1, which are not simultaneously zero.

4. The additive composition according to claim 2, wherein R₁, R₂ and R₃ in formula (I) are, independently from each other, selected from H and methyl; R₄ is methylene or ethylene; R₅ is H; R₆ is methyl; X is O or N, preferably O; a is 0; and b is 1.

5. The additive composition according to claim 2, wherein R₁, R₂ and R₃ in formula (I) are, independently from each other, selected from H and methyl; R₄ is methylene or ethylene; R₅ is H; R₆ is methyl; X is O or N, preferably O; Y is O; both a and b are 1.

6. The additive composition according to claim 2, wherein R₁, R₂ and R₃ in formula (II) are, independently from each other, selected from H and C₁₋₄-alkyl,preferably methyl or ethyl; R₅ is selected from H and methyl, preferably H; R₆ is selected from methyl, ethyl and propyl, preferably methyl; X is O or N, preferably O; R₄' is selected from H, methyl and ethyl; and c is 2, 3, 4, 5, 6, 7 or 8.

7. The additive composition according to claim 2, wherein R₁, R₂ and R₃ in formula (II) are, independently from each other, selected from H and methyl; R₅ is H; R₆ is methyl; R₄' is H or methyl; X is O or N, preferably O; and c is 2, 3, 4, 5, 6, 7 or 8.

8. The additive composition according to claim 1, wherein the at least one acetoacetyl functional ethylenically unsaturated monomer is selected from compounds of formula:

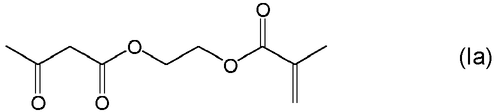

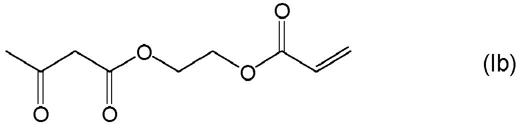

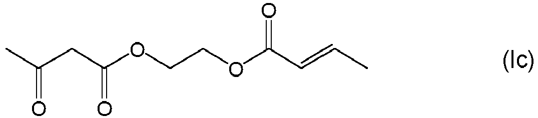

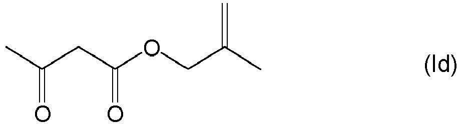

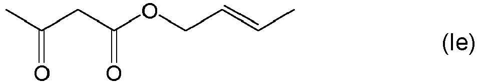

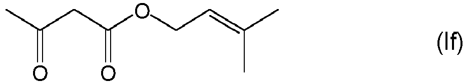

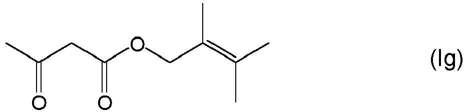

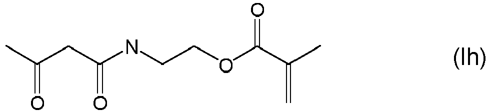

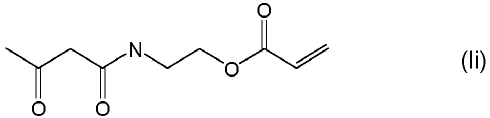

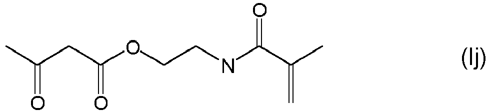

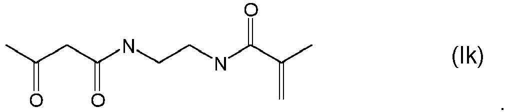

9. The additive composition according to any of claims 1 to 8, wherein the polymer of acetoacetyl functional ethylenically unsaturated monomer has a weight-average molecular weight in the range of 5,000 to 3,000,000, preferably from 10,000 to 100,000, more preferably from 15,000 to 50,000, wherein weight-average molecular weight the was measured by Gel Permeation Chromatography (GPC) against polystyrene standard in tetrahydrofuran.

10. The additive composition according to any of claims 1 to 9, which contains at least one amine selected from monoamines or polyamines, preferably polyamines, more preferably C₂₋₃₀-diamines, polyalkylenimines and polyether amines.

11. The additive composition according to any of claims 1 to 9, which contains at least one amine selected from C₂₋₁₅-diamines, preferably C₂₋₁₀-diamines, more preferably C₂₋₆-diamines.

12. The additive composition according to any of claims 1 to 9, which contains at least one amine selected from branched polyalkylenimines, preferably branched polyalkylenimines with a weight average molecular weight (Mw) in the range of 200 to 30,000, more preferably 300 to 10,000 and even more preferably 500 to 2,000, wherein weight-average molecular weight the was measured by Gel Permeation Chromatography (GPC) against polystyrene standard in tetrahydrofuran.

13. The additive composition according to any of claims 1 to 9, which contains at least one amine selected from polyether amines, preferably polyether amines with a weight average molecular weight in the range of 104 to 8,000, more preferably 148 to 6,000 and even more preferably 200 to 4,000, wherein weight-average molecular weight the was measured by Gel Permeation Chromatography (GPC) against polystyrene standard in tetrahydrofuran.

14. The additive composition according to any of the claims 10 to 13, wherein the polymer of acetoacetyl functional ethylenically unsaturated monomer and the at least one amine are in a weight ratio in the range of 5:1 to 1:5, preferably from 3:1 to 1:3, more preferably 1:1, each based on dry weight.

15. An interior coating composition, preferably a waterborne interior coating composition, which comprises
- a binder,
- a polymer of acetoacetyl functional ethylenically unsaturated monomer as defined in any of claims 1 to 9; and
- optionally, at least one amine.

16. The interior coating composition according to claim 15, which contains at least one amine.

17. The interior coating composition according to claim 16, which contains at least one amine selected from monoamines or polyamines, preferably polyamines, more preferably C₂₋₃₀-diamines, polyalkylenimines and polyether amines.

18. The interior coating composition according to claim 15, which contains at least one amine selected from C₂₋₁₅-diamines, preferably C₂₋₁₀-diamines, more preferably C₂₋₆-diamines.

19. The interior coating composition according to claim 15, which contains at least one amine selected from branched polyalkylenimines, preferably branched polyalkylenimines with a weight average molecular weight (Mw) in the range of 200 to 30,000, more preferably 300 to 10,000 and even more preferably 500 to 2,000, wherein weight-average molecular weight the was measured by Gel Permeation Chromatography (GPC) against polystyrene standard in tetrahydrofuran.

20. The interior coating composition according to claim 15, which contains at least one amine selected from polyether amines, preferably polyether amines with a weight average molecular weight in the range of 104 to 8,000, more preferably 148 to 6,000 and even more preferably 200 to 4,000, wherein weight-average molecular weight the was measured by Gel Permeation Chromatography (GPC) against polystyrene standard in tetrahydrofuran.

21. The interior coating composition according to any of claims 15 to 20, which comprises,
- from 0.1 to 30 wt%, preferably from 0.3 to 10 wt%, most preferably from 0.3 to 5 wt%, of the polymer of acetoacetyl functional ethylenically unsaturated monomer, and
- optionally, from 0.1 to 30 wt%, preferably from 0.3 to 10 wt%, most preferably from 0.3 to 5 wt%, of the at least one amine,
each being based on the total weight of the interior coating composition.

22. Use of a polymer of acetoacetyl functional ethylenically unsaturated monomer as defined in any of claims 1 to 9 for abatement of free aldehydes, particularly formaldehyde, or removing free aldehydes, particularly formaldehyde, in the air.

23. Use of a polymer of acetoacetyl functional ethylenically unsaturated monomer as defined in any of claims 1 to 9 in combination with at least one amine for abatement of free aldehydes, particularly formaldehyde, or removing free aldehydes, particularly formaldehyde, in the air.

24. The use according to claim 23, wherein the at least one amine is selected from monoamines or polyamines, preferably polyamines, more preferably C₂₋₃₀-diamines, polyalkylenimines and polyether amines.

## Patentansprüche

1. Additivzusammensetzung zur Verringerung von freien Aldehyden, insbesondere Formaldehyd, oder Entfernung davon in der Luft, die Folgendes umfasst:
- ein Polymer eines acetoacetylfunktionellen ethylenisch ungesättigten Monomers, das mindestens 70 Gew.-%, weiter bevorzugt 80 bis 100 Gew.-%, noch weiter bevorzugt 90 bis 100 Gew.-%, mindestens eines acetoacetylfunktionellen ethylenisch ungesättigten Monomers und 0 bis 30 Gew.-%, weiter bevorzugt 0 bis 20 Gew.-%, noch weiter bevorzugt 0 bis 10 Gew.-%, mindestens eines ethylenisch ungesättigten Monomers, das von dem acetoacetylfunktionellen ethylenisch ungesättigten Monomer verschieden ist, bezogen auf das Gesamtgewicht aller Monomere, umfasst, und
- mindestens ein Amin.

2. Additivzusammensetzung nach Anspruch 1, wobei das mindestens eine acetoacetylfunktionelle ethylenisch ungesättigte Monomer die Formel (I) oder die Formel (II) aufweist: 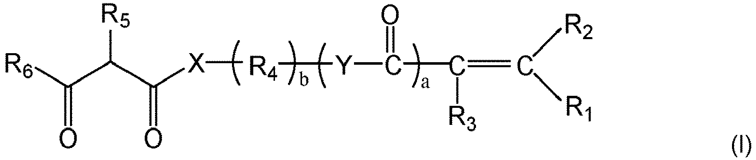 or 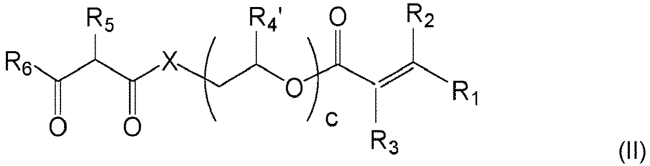 wobei
R₁ für H oder C₁₋₁₀-Alkyl steht;
R₂ für H, C₁₋₁₀-Alkyl oder Phenyl, das gegebenenfalls durch mindestens eines von C₁₋₁₀-Alkyl, F, Cl, Br, I, CN, Hydroxyl und C₁₋₁₀-Alkoxygruppen substituiert ist, steht;
R₃ für H, C₁₋₁₀-Alkyl oder Phenyl, das gegebenenfalls durch mindestens eines von C₁₋₁₀-Alkyl, F, Cl, Br, I, CN, Hydroxyl und C₁₋₁₀-Alkoxygruppen substituiert ist, steht;
R₄ für C₁₋₁₀-Alkylen oder Phenylen steht;
R₅ für H, C₁₋₁₀-Alkyl oder Phenyl, das gegebenenfalls durch mindestens eines von C₁₋₁₀-Alkyl, F, Cl, Br, I, CN, Hydroxyl und C₁₋₁₀-Alkoxygruppen substituiert ist, steht;
R₆ für C₁₋₁₀-Alkyl steht;
R₄' für H oder C₁₋₄-Alkyl steht;
X und Y unabhängig für O oder N stehen;
a und b unabhängig für 0 oder 1 stehen und nicht gleichzeitig für null stehen und
c für eine Zahl im Bereich von 2 bis 10 steht.

3. Additivzusammensetzung nach Anspruch 2, wobei R₁, R₂ und R₃ in Formel (I) unabhängig voneinander aus H und C₁₋₄-Alkyl, vorzugsweise Methyl oder Ethyl, ausgewählt sind; R₄ für C₁₋₄-Alkylen, vorzugsweise Methylen oder Ethylen, steht; R₅ aus H und Methyl, vorzugsweise H, ausgewählt ist; R₆ aus Methyl, Ethyl und Propyl, vorzugsweise Methyl, ausgewählt ist; X für O oder N, vorzugsweise O, steht; Y für O steht; a und b unabhängig für 0 oder 1 stehen und nicht gleichzeitig für null stehen.

4. Additivzusammensetzung nach Anspruch 2, wobei R₁, R₂ und R₃ in Formel (I) unabhängig voneinander aus H und Methyl ausgewählt sind; R₄ für Methylen oder Ethylen steht; R₅ für H steht; R₆ für Methyl steht; X für O oder N, vorzugsweise O, steht; a für 0 steht und b für 1 steht.

5. Additivzusammensetzung nach Anspruch 2, wobei R₁, R₂ und R₃ in Formel (I) unabhängig voneinander aus H und Methyl ausgewählt sind; R₄ für Methylen oder Ethylen steht; R₅ für H steht; R₆ für Methyl steht; X für O oder N, vorzugsweise O, steht; Y für O steht und sowohl a als auch b für 1 stehen.

6. Additivzusammensetzung nach Anspruch 2, wobei R₁, R₂ und R₃ in Formel (II) unabhängig voneinander aus H und C₁₋₄-Alkyl, vorzugsweise Methyl oder Ethyl, ausgewählt sind; R₅ aus H und Methyl, vorzugsweise H, ausgewählt ist; R₆ aus Methyl, Ethyl und Propyl, vorzugsweise Methyl, ausgewählt ist; X für O oder N, vorzugsweise O, steht; R₄' aus H, Methyl und Ethyl ausgewählt ist und c für 2, 3, 4, 5, 6, 7 oder 8 steht.

7. Additivzusammensetzung nach Anspruch 2, wobei R₁, R₂ und R₃ in Formel (II) unabhängig voneinander aus H und Methyl ausgewählt sind; R₅ für H steht; R₆ für Methyl steht; R₄' für H oder Methyl steht; X für O oder N, vorzugsweise O, steht und c für 2, 3, 4, 5, 6, 7 oder 8 steht.

8. Additivzusammensetzung nach Anspruch 1, wobei das mindestens eine acetoacetylfunktionelle ethylenisch ungesättigte Monomer aus Verbindungen der Formel: 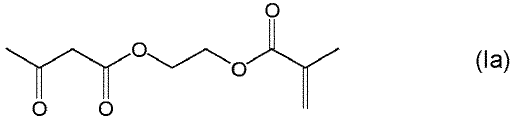 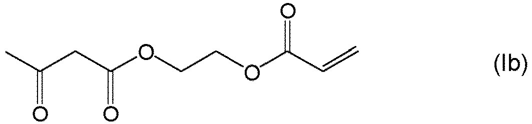 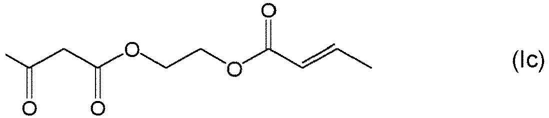 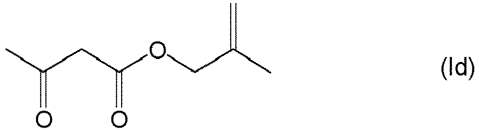 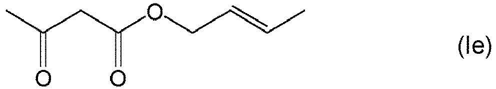 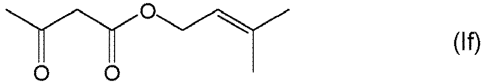 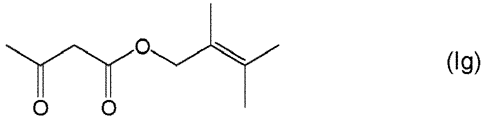 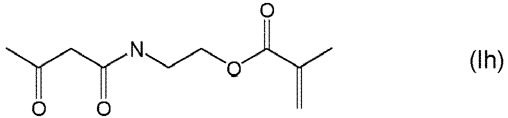 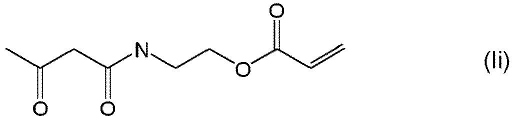 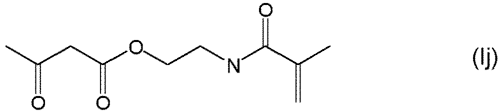 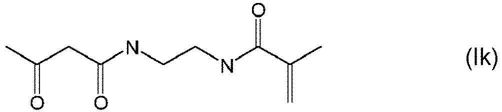 ausgewählt ist.

9. Additivzusammensetzung nach einem der Ansprüche 1 bis 8, wobei das Polymer eines acetoacetylfunktionellen ethylenisch ungesättigten Monomers ein gewichtsmittleres Molekulargewicht im Bereich von 5000 bis 3.000.000, vorzugsweise von 10.000 bis 100.000, weiter bevorzugt von 15.000 bis 50.000 aufweist, wobei das gewichtsmittlere Molekulargewicht mittels Gelpermeationschromatographie (GPC) gegen Polystyrol-Standard in Tetrahydrofuran gemessen wurde.

10. Additivzusammensetzung nach einem der Ansprüche 1 bis 9, die mindestens ein Amin enthält, das aus Monoaminen oder Polyaminen, vorzugsweise Polyaminen, weiter bevorzugt C₂₋₃₀-Diaminen, Polyalkyleniminen und Polyetheraminen, ausgewählt ist.

11. Additivzusammensetzung nach einem der Ansprüche 1 bis 9, die mindestens ein Amin enthält, das aus C₂₋₁₅-Diaminen, vorzugsweise C₂₋₁₀-Diaminen, weiter bevorzugt C₂₋₆-Diaminen, ausgewählt ist.

12. Additivzusammensetzung nach einem der Ansprüche 1 bis 9, die mindestens ein Amin enthält, das aus verzweigten Polyalkyleniminen, vorzugsweise verzweigten Polyalkyleniminen mit einem gewichtsmittleren Molekulargewicht (Mw) im Bereich von 200 bis 30.000, weiter bevorzugt 300 bis 10.000 und noch weiter bevorzugt 500 bis 2000, ausgewählt ist, wobei das gewichtsmittlere Molekulargewicht mittels Gelpermeationschromatographie (GPC) gegen Polystyrol-Standard in Tetrahydrofuran gemessen wurde.

13. Additivzusammensetzung nach einem der Ansprüche 1 bis 9, die mindestens ein Amin enthält, das aus Polyetheraminen, vorzugsweise Polyetheraminen mit einem gewichtsmittleren Molekulargewicht im Bereich von 104 bis 8000, weiter bevorzugt 148 bis 6000 und noch weiter bevorzugt 200 bis 4000, ausgewählt ist, wobei das gewichtsmittlere Molekulargewicht mittels Gelpermeationschromatographie (GPC) gegen Polystyrol-Standard in Tetrahydrofuran gemessen wurde.

14. Additivzusammensetzung nach einem der Ansprüche 10 bis 13, wobei das Polymer eines acetoacetylfunktionellen ethylenisch ungesättigten Monomers und das mindestens eine Amin in einem Gewichtsverhältnis im Bereich von 5:1 bis 1:5, vorzugsweise von 3:1 bis 1:3, weiter bevorzugt 1:1, jeweils bezogen auf das Trockengewicht, vorliegen.

15. Innenbeschichtungszusammensetzung, vorzugsweise wässrige Innenbeschichtungszusammensetzung, die Folgendes enthält:
- ein Bindemittel,
- ein Polymer eines acetoacetylfunktionellen ethylenisch ungesättigten Monomers gemäß einem der Ansprüche 1 bis 9 und
- gegebenenfalls mindestens ein Amin.

16. Innenbeschichtungszusammensetzung nach Anspruch 15, die mindestens ein Amin enthält.

17. Innenbeschichtungszusammensetzung nach Anspruch 16, die mindestens ein Amin enthält, das aus Monoaminen oder Polyaminen, vorzugsweise Polyaminen, weiter bevorzugt C₂₋₃₀-Diaminen, Polyalkyleniminen und Polyetheraminen, ausgewählt ist.

18. Innenbeschichtungszusammensetzung nach Anspruch 15, die mindestens ein Amin enthält, das aus C₂₋₁₅-Diaminen, vorzugsweise C₂₋₁₀-Diaminen, weiter bevorzugt C₂₋₆-Diaminen, ausgewählt ist.

19. Innenbeschichtungszusammensetzung nach Anspruch 15, die mindestens ein Amin enthält, das aus verzweigten Polyalkyleniminen, vorzugsweise verzweigten Polyalkyleniminen mit einem gewichtsmittleren Molekulargewicht (Mw) im Bereich von 200 bis 30.000, weiter bevorzugt 300 bis 10.000 und noch weiter bevorzugt 500 bis 2000, ausgewählt ist, wobei das gewichtsmittlere Molekulargewicht mittels Gelpermeationschromatographie (GPC) gegen Polystyrol-Standard in Tetrahydrofuran gemessen wurde.

20. Innenbeschichtungszusammensetzung nach Anspruch 15, die mindestens ein Amin enthält, das aus Polyetheraminen, vorzugsweise Polyetheraminen mit einem gewichtsmittleren Molekulargewicht im Bereich von 104 bis 8000, weiter bevorzugt 148 bis 6000 und noch weiter bevorzugt 200 bis 4000, ausgewählt ist, wobei das gewichtsmittlere Molekulargewicht mittels Gelpermeationschromatographie (GPC) gegen Polystyrol-Standard in Tetrahydrofuran gemessen wurde.

21. Innenbeschichtungszusammensetzung nach einem der Ansprüche 15 bis 20, die Folgendes umfasst:
- 0,1 bis 30 Gew.-%, vorzugsweise 0,3 bis 10 Gew.-%, ganz besonders bevorzugt 0,3 bis 5 Gew.-%, des Polymers eines acetoacetylfunktionellen ethylenisch ungesättigten Monomers und
- gegebenenfalls 0,1 bis 30 Gew.-%, vorzugsweise 0,3 bis 10 Gew.-%, ganz besonders bevorzugt 0,3 bis 5 Gew.-%, des mindestens einen Amins,
jeweils bezogen auf das Gesamtgewicht der Innenbeschichtungszusammensetzung.

22. Verwendung eines Polymers eines acetoacetylfunktionellen ethylenisch ungesättigten Monomers gemäß einem der Ansprüche 1 bis 9 zur Verringerung von freien Aldehyden, insbesondere Formaldehyd, oder Entfernung davon in der Luft.

23. Verwendung eines Polymers eines acetoacetylfunktionellen ethylenisch ungesättigten Monomers gemäß einem der Ansprüche 1 bis 9 in Kombination mit mindestens einem Amin zur Verringerung von freien Aldehyden, insbesondere Formaldehyd, oder Entfernung davon in der Luft.

24. Verwendung nach Anspruch 23, wobei das mindestens eine Amin aus Monoaminen oder Polyaminen, vorzugsweise Polyaminen, weiter bevorzugt C₂₋₃₀-Diaminen, Polyalkyleniminen und Polyetheraminen, ausgewählt ist.

## Revendications

1. Composition d'additif pour la réduction d'aldéhydes libres, particulièrement de formaldéhyde, ou l'élimination de ceux-ci dans l'air, qui comprend
- un polymère d'un monomère éthyléniquement insaturé fonctionnalisé par acétoacétyle, qui contient au moins 70 % en poids, plus préférablement 80 à 100 % en poids, encore plus préférablement de 90 à 100 % en poids d'au moins un monomère éthyléniquement insaturé fonctionnalisé par acétoacétyle, et 0 à 30 % en poids, plus préférablement 0 à 20 % en poids, encore plus préférablement 0 à 10 % en poids d'au moins un monomère éthyléniquement insaturé autre que le monomère éthyléniquement insaturé fonctionnalisé par acétoacétyle, sur la base du poids total de tous les monomères, et
- au moins une amine.

2. Composition d'additif selon la revendication 1, l'au moins un monomère éthyléniquement insaturé fonctionnalisé par acétoacétyle étant de formule (I) ou de formule (II) 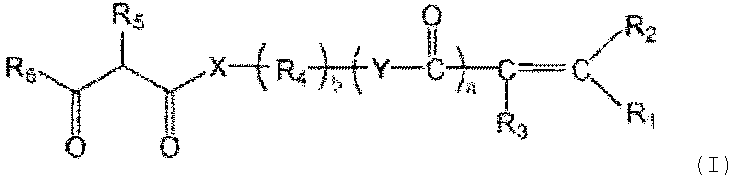 ou 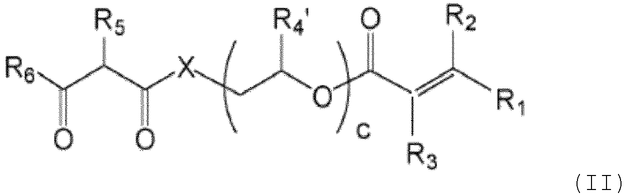
R₁ étant H ou C₁₋₁₀ alkyle ;
R₂ étant H, C₁₋₁₀ alkyle ou phényle qui est éventuellement substitué par au moins l'un parmi des groupes C₁₋₁₀ alkyle, F, Cl, Br, I, CN, hydroxyle et C₁₋₁₀ alcoxy ;
R₃ étant H, C₁₋₁₀ alkyle ou phényle qui est éventuellement substitué par au moins l'un parmi des groupes C₁₋₁₀ alkyle, F, Cl, Br, I, CN, hydroxyle et C₁₋₁₀ alcoxy ;
R₄ étant C₁₋₁₀ alkylène ou phénylène ;
R₅ étant H, C₁₋₁₀ alkyle ou phényle qui est éventuellement substitué par au moins l'un parmi des groupes C₁₋₁₀ alkyle, F, Cl, Br, I, CN, hydroxyle et C₁₋₁₀ alcoxy ;
R₆ étant C₁₋₁₀ alkyle ;
R₄' étant H ou C₁₋₄ alkyle ;
X et Y étant indépendamment O ou N ;
a et b étant indépendamment 0 ou 1, qui ne sont pas simultanément zéro ; et
c étant un nombre dans la plage de 2 à 10.

3. Composition d'additif selon la revendication 2, R₁, R₂ et R₃ dans la formule (I) étant, indépendamment les uns des autres, choisis parmi H et C₁₋₄ alkyle, préférablement méthyle ou éthyle ; R₄ étant C₁₋₄ alkylène, préférablement méthylène ou éthylène ; R₅ étant choisi parmi H et méthyle, préférablement H ; R₆ étant choisi parmi méthyle, éthyle et propyle, préférablement méthyle ; X étant O ou N, préférablement O ; Y étant O ; a et b étant indépendamment 0 ou 1, qui ne sont pas simultanément zéro.

4. Composition d'additif selon la revendication 2, R₁, R₂ et R₃ dans la formule (I) étant, indépendamment les uns des autres, choisis parmi H et méthyle ; R₄ étant méthylène ou éthylène ; R₅ étant H ; R₆ étant méthyle ; X étant O ou N, préférablement O ; a étant 0 ; et b étant 1.

5. Composition d'additif selon la revendication 2, R₁, R₂ et R₃ dans la formule (I) étant, indépendamment les uns des autres, choisis parmi H et méthyle ; R₄ étant méthylène ou éthylène ; R₅ étant H ; R₆ étant méthyle ; X étant O ou N, préférablement O ; Y étant O ; à la fois a et b étant 1.

6. Composition d'additif selon la revendication 2, R₁, R₂ et R₃ dans la formule (I) étant, indépendamment les uns des autres, choisis parmi H et C₁₋₄ alkyle, préférablement méthyle ou éthyle ; R₅ étant choisi parmi H et méthyle, préférablement H ; R₆ étant choisi parmi méthyle, éthyle et propyle, préférablement méthyle ; X étant O ou N, préférablement O ; R₄' étant choisi parmi H, méthyle et éthyle ; et c étant 2, 3, 4, 5, 6, 7 ou 8.

7. Composition d'additif selon la revendication 2, R₁, R₂ et R₃ dans la formule (I) étant, indépendamment les uns des autres, choisis parmi H et méthyle ; R₅ étant H ; R₆ étant méthyle ; R₄' étant H ou méthyle ; X étant O ou N, préférablement O ; et c étant 2, 3, 4, 5, 6, 7 ou 8.

8. Composition d'additif selon la revendication 1, l'au moins un monomère éthyléniquement insaturé fonctionnalisé par acétoacétyle étant choisi parmi des composés de formule :

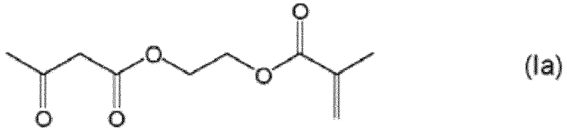

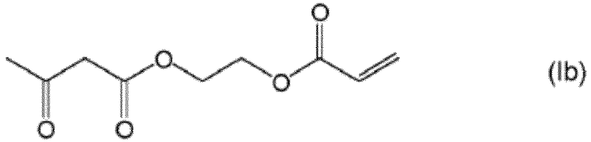

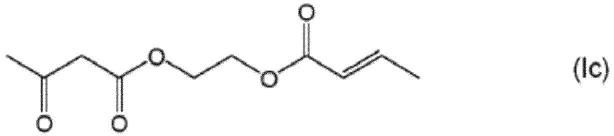

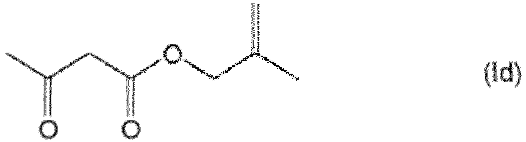

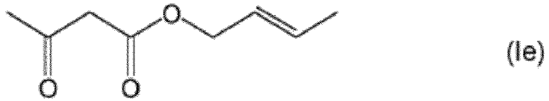

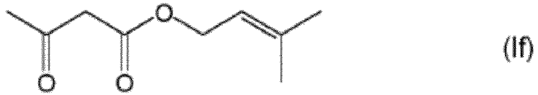

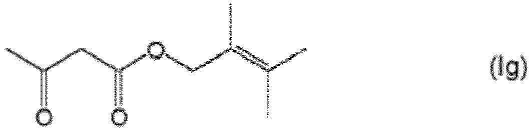

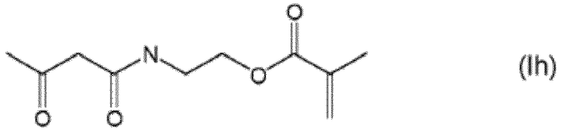

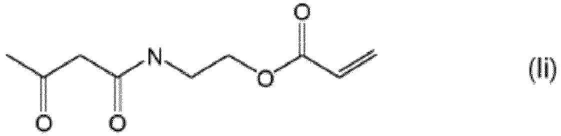

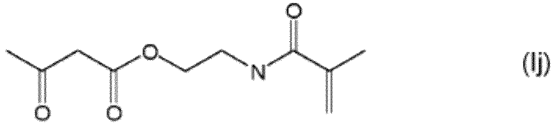

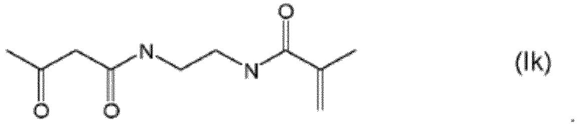

9. Composition d'additif selon l'une quelconque des revendications 1 à 8, le polymère de monomère éthyléniquement insaturé fonctionnalisé par acétoacétyle possédant un poids moléculaire moyen en poids dans la plage de 5 000 à 3 000 000, préférablement de 10 000 à 100 000, préférablement de 15 000 à 50 000, le poids moléculaire moyen en poids ayant été mesuré par chromatographie à perméation de gel (CPG) par rapport à une référence de polystyrène dans le tétrahydrofuranne.

10. Composition d'additif selon l'une quelconque des revendications 1 à 9, qui contient au moins une amine choisie parmi des monoamines et des polyamines, préférablement des polyamines, plus préférablement des C₂₋₃₀ diamines, des polyalkylèneimines et des polyéther amines.

11. Composition d'additif selon l'une quelconque des revendications 1 à 9, qui contient au moins une amine choisie parmi des C₂₋₁₅ diamines, préférablement des C₂₋₁₀ diamines, plus préférablement des C₂₋₆ diamines.

12. Composition d'additif selon l'une quelconque des revendications 1 à 9, qui contient au moins une amine choisie parmi des polyalkylèneimines ramifiées, préférablement des polyalkylèneimines ramifiées dotées d'un poids moléculaire moyen en poids (Mw) dans la plage de 200 à 30 000, plus préférablement de 300 à 10 000 et encore plus préférablement de 500 à 2 000, le poids moléculaire moyen en poids ayant été mesuré par chromatographie à perméation de gel (CPG) par rapport à une référence de polystyrène dans le tétrahydrofuranne.

13. Composition d'additif selon l'une quelconque des revendications 1 à 9, qui contient au moins une amine choisie parmi des polyéther amines, préférablement des polyéther amines dotées d'un poids moléculaire moyen en poids dans la plage de 104 à 8 000, plus préférablement de 148 à 6 000 et encore plus préférablement de 200 à 4 000, le poids moléculaire moyen en poids ayant été mesuré par chromatographie à perméation de gel (CPG) par rapport à une référence de polystyrène dans le tétrahydrofuranne.

14. Composition d'additif selon l'une quelconque des revendications 10 à 13, le polymère de monomère éthyléniquement insaturé fonctionnalisé par acétoacétyle et l'au moins une amine étant présents en un rapport en poids dans la plage de 5 : 1 à 1 : 5, préférablement de 3 : 1 à 1 : 3, plus préférablement de 1 : 1, chacun basé sur le poids sec.

15. Composition de revêtement intérieur, préférablement composition de revêtement intérieur à base d'eau, qui comprend
- un liant,
- un polymère de monomère éthyléniquement insaturé fonctionnalisé par acétoacétyle tel que défini dans l'une quelconque des revendications 1 à 9 ; et
- éventuellement, au moins une amine.

16. Composition de revêtement intérieur selon la revendication 15, qui contient au moins une amine.

17. Composition de revêtement intérieur selon la revendication 16, qui contient au moins une amine choisie parmi des monoamines ou des polyamines, préférablement des polyamines, plus préférablement des C₂₋₃₀ diamines, des polyalkylèneimines et des polyéther amines.

18. Composition de revêtement intérieur selon la revendication 15, qui contient au moins une amine choisie parmi des C₂₋₁₅ diamines, préférablement des C₂₋₁₀ diamines, plus préférablement des C₂₋₆ diamines.

19. Composition de revêtement intérieur selon la revendication 15, qui contient au moins une amine choisie parmi des polyalkylèneimines ramifiées, préférablement des polyalkylèneimines ramifiées dotées d'un poids moléculaire moyen en poids (Mw) dans la plage de 200 à 30 000, plus préférablement de 300 à 10 000 et encore plus préférablement de 500 à 2 000, le poids moléculaire moyen en poids ayant été mesuré par chromatographie à perméation de gel (CPG) par rapport à une référence de polystyrène dans le tétrahydrofuranne.

20. Composition de revêtement intérieur selon la revendication 15, qui contient au moins une amine choisie parmi des polyéther amines, préférablement des polyéther amines dotées d'un poids moléculaire moyen en poids dans la plage de 104 à 8 000, plus préférablement de 148 à 6 000 et encore plus préférablement de 200 à 4 000, le poids moléculaire moyen en poids ayant été mesuré par chromatographie à perméation de gel (CPG) par rapport à une référence de polystyrène dans le tétrahydrofuranne.

21. Composition de revêtement intérieur selon l'une quelconque des revendications 15 à 20, qui comprend,
- de 0,1 à 30 % en poids, préférablement de 0,3 à 10 % en poids, le plus préférablement de 0,3 à 5 % en poids, du polymère de monomère éthyléniquement insaturé fonctionnalisé par acétoacétyle, et
- éventuellement, de 0,1 à 30 % en poids, préférablement de 0,3 à 10 % en poids, le plus préférablement de 0,3 à 5 % en poids, de l'au moins une amine,
chacun étant basé sur le poids total de la composition de revêtement intérieur.

22. Utilisation d'un polymère de monomère éthyléniquement insaturé fonctionnalisé par acétoacétyle tel que défini dans l'une quelconque des revendications 1 à 9 pour la réduction d'aldéhydes libres, particulièrement de formaldéhyde, ou l'élimination d'aldéhydes libres, particulièrement de formaldéhyde, dans l'air.

23. Utilisation d'un polymère de monomère éthyléniquement insaturé fonctionnalisé par acétoacétyle tel que défini dans l'une quelconque des revendications 1 à 9 en combinaison avec au moins une amine pour la réduction d'aldéhydes libres, particulièrement de formaldéhyde, ou l'élimination d'aldéhydes libres, particulièrement de formaldéhyde, dans l'air.

24. Utilisation selon la revendication 23, l'au moins une amine étant choisie parmi des monoamines et des polyamines, préférablement des polyamines, plus préférablement des C₂₋₃₀ diamines, des polyalkylèneimines et des polyéther amines.
